(19) Europäisches Patentamt / European Patent Office / Office européen des brevets

(11) EP 4 533 937 A1

(12) **EUROPEAN PATENT APPLICATION**
published in accordance with Art. 153(4) EPC

(43) Date of publication:
09.04.2025 Bulletin 2025/15

(21) Application number: 23811372.4

(22) Date of filing: 17.02.2023

(51) International Patent Classification (IPC):
*A01G 7/00* (2006.01)

(52) Cooperative Patent Classification (CPC):
A01G 7/00

(86) International application number:
PCT/JP2023/005717

(87) International publication number:
WO 2023/228491 (30.11.2023 Gazette 2023/48)

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
KH MA MD TN

(30) Priority: 25.05.2022 JP 2022085570

(71) Applicant: Agri Blue Co., Ltd.
Takamatsu-shi, Kagawa 760-0062 (JP)

(72) Inventors:
• KAJIYAMA, Hiroshi
Takamatsu-shi, Kagawa 760-0062 (JP)
• KAJIYAMA, Miya
Takamatsu-shi, Kagawa 760-0062 (JP)
• KAJIYAMA, Rin
Takamatsu-shi, Kagawa 760-0062 (JP)

(74) Representative: Louis Pöhlau Lohrentz
Patentanwälte
Postfach 30 55
90014 Nürnberg (DE)

(54) **PLANT CULTIVATION METHOD, PLANT CULTIVATION DEVICE, AND PHOTOSYNTHETIC ORGANISM PRODUCTION METHOD**

(57) Provided is a plant cultivation method that performs light control of distribution of glucose produced by photosynthesis to a primary metabolic pathway and a secondary metabolic pathway, and that can control metabolite production in each metabolic reaction. In at least a part of a cultivation period from sowing to harvest, irradiation is performed with main light for photosynthesis and additional light for promoting photosynthesis of a plant via the main light. The additional light includes additional signal light the light intensity of which varies periodically and additional relaxation light the light intensity of which changes more gently than the additional light. The wavelength of the additional signal light includes a light absorption wavelength band of a red light receptor in the plant.

**FIG. 1**

EP 4 533 937 A1

# EP 4 533 937 A1

**Description**

Technical Field

The present invention relates to, for example, a plant cultivation method for accelerating production of useful components of plants, a plant cultivation device, and a photosynthetic organism production method.

Background Art

Plants convert glucose produced by photosynthesis into other substances in a primary metabolic circuit and a secondary metabolic circuit. The primary metabolism is metabolism common to all plants, and produces chemical energy necessary for survival and growth of plants and chemical substances necessary for organogenesis such as roots, stems, and leaves. Although the secondary metabolism varies depending on the plant, a chemical substance useful for protection against external enemy and damage and repair of damage is produced.

Chemical substances that plants produce by metabolism are useful for humans as drugs for detoxification, analgesia, antipyretic, and antioxidant. Therefore, gene recombination technology and genome editing technology are applied for efficient production of plant metabolites.

Citation List

Patent Literature

Patent Literature 1: WO 2019/031559 A

Summary of Invention

Technical Problem

In the method described in Patent Literature 1, light having a relatively low duty ratio is emitted under a light environment in which photosynthesis of plants is not performed. In the experiments of the inventors, results have been obtained that plants are damaged by relatively strong stimuli and degenerate. In addition, there is also a problem that the production of substances of primary metabolism and secondary metabolism cannot be independently controlled.

An object of the present invention is to provide a plant cultivation method and a plant cultivation device capable of optically controlling distribution of glucose generated by photosynthesis to a primary metabolic pathway and a secondary metabolic pathway and controlling production of a metabolite in each metabolic reaction.

Solution to Problem

The present invention provides a plant cultivation method, a plant cultivation device, and a photosynthetic organism production method having the following configurations.

(1) A plant cultivation method including performing irradiation with main light for photosynthesis and additional light for accelerating photosynthesis of a plant by the main light in at least a part of a cultivation period from sowing to harvest, in which

the additional light includes additional signal light of which light intensity periodically fluctuates and additional relaxation light of which light intensity changes more slowly than the additional light, and a wavelength of the additional signal light includes a light absorption wavelength band of a red light receptor in the plant.

(2) The plant cultivation method according to (1), in which a leaf or a bud of a plant is cut off from a root, a branch, or a stem, only the leaf or the bud is irradiated with the main light for a certain period of time, and then the leaf or the bud is held in a dark place for a certain period of time.

(3) A plant cultivation device which is irradiated with main light for photosynthesis of a plant, the plant cultivation device including:

an additional light source configured to emit additional light for accelerating photosynthesis of a plant by the main light; and
an irradiation light control portion capable of driving and controlling the additional light source, in which
the additional light source includes
an additional signal light source configured to emit additional signal light of which light intensity periodically fluctuates, and

an additional relaxation light source configured to emit additional relaxation light in which light intensity changes more slowly than the additional light,

the additional relaxation light together with the additional signal light are irradiated, and

the wavelength of the additional signal light includes a light absorption wavelength band of a red light receptor in the plant.

(4) A method for producing a photosynthetic organism including performing irradiation with main light for photosynthesis and irradiation with additional light for accelerating photosynthesis of the photosynthetic organism by the main light in at least a part of a cultivation period from sowing to harvest, in which

the additional light includes additional signal light of which light intensity periodically fluctuates and additional relaxation light of which light intensity changes more slowly than the additional signal light, and a wavelength of the additional signal light includes a light absorption wavelength band of a red light receptor in a photosynthetic organism.

Advantageous Effects of Invention

The present invention is to provide a plant cultivation method, a plant cultivation device, and a photosynthetic organism production method capable of optically controlling distribution of glucose generated by photosynthesis to a primary metabolic pathway and a secondary metabolic pathway and controlling production of a metabolite in each metabolic reaction.

Brief Description of Drawings

[Fig. 1] Fig. 1 is an explanatory diagram illustrating light absorption wavelength bands of a photosynthesis dye and a photoreceptor.

[Fig. 2] Fig. 2 is an explanatory diagram illustrating a flow until glucose as a photosynthesis product is distributed to a translocation pathway and a secondary metabolic pathway.

[Fig. 3] Fig. 3 is an explanatory diagram illustrating a light absorption spectrum of phytochrome.

[Fig. 4] Fig. 4 is an explanatory diagram illustrating a state change of phytochrome due to light absorption.

[Fig. 5] Fig. 5 is an explanatory diagram illustrating additional light according to the embodiment.

[Fig. 6] Fig. 6 is an explanatory diagram illustrating a light irradiation profile after harvesting according to the embodiment.

[Fig. 7] Fig. 7 is a schematic configuration diagram of a plant cultivation device.

[Fig. 8] Figs. 8(a) to 8(d) are explanatory diagrams illustrating conditions of Example 1.

[Fig. 9] Figs. 9(a) to 9(d) are explanatory diagrams illustrating conditions of Example 2.

[Fig. 10] Figs. 10(a) to 10(d) are explanatory diagrams illustrating conditions of Example 3.

[Fig. 11] Fig. 11 is an explanatory diagram schematically illustrating signal light and relaxation light.

[Fig. 12] Fig. 12 is an explanatory diagram illustrating a basic utilization example 1 of an optical fiber.

[Fig. 13] Fig. 13 is an explanatory diagram illustrating a basic utilization example 2 of an optical fiber.

[Fig. 14] Fig. 14 is an explanatory diagram illustrating a basic utilization example 3 of an optical fiber.

[Fig. 15] Fig. 15 is an explanatory diagram illustrating a basic utilization example 4 of an optical fiber.

[Fig. 16] Fig. 16 is an explanatory diagram illustrating a basic utilization example 5 of an optical fiber.

[Fig. 17] Fig. 17 is an explanatory diagram illustrating synchronization of waveforms according to the basic utilization example 5 of an optical fiber.

[Fig. 18] Fig. 18 is a flowchart illustrating a procedure of seedling growth performed in two stages.

[Fig. 19] Fig. 19 is a schematic configuration diagram illustrating a microalgae growth device used for two-stage cultivation.

[Fig. 20] Fig. 20 is a flowchart illustrating a procedure of growth of Euglena performed in two stages.

[Fig. 21] Fig. 21 is an explanatory diagram schematically illustrating a state in which additional light is emitted from a flying object.

[Fig. 22] Fig. 22(a) is an explanatory diagram illustrating a control of Example 4 by an image, and Fig. 22(b) is an explanatory diagram illustrating a test section of Example 4 by an image.

Description of Embodiments

Hereinafter, embodiments of the present invention will be described in detail.

<Plant Cultivation Method>

<<Metabolite Increasing Technology Utilizing Stress>>

In the present embodiment, first, a plant cultivation method using stress caused by phytochrome will be described. Next, a plant cultivation method using stress caused by external damage of a plant will be described.

<<Stress Caused by Phytochrome>>

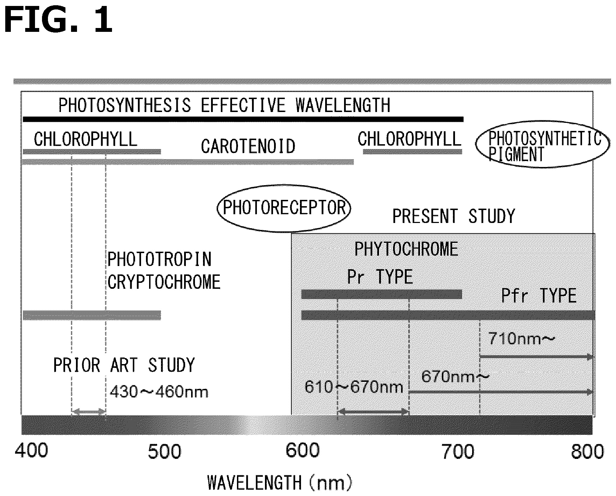

Plants utilize photoreceptors to utilize light and light environments for growth. Photoreceptors include chlorophyll and carotenoids that collect light energy necessary for photosynthesis, and include phytochrome, cryptochrome, and phototropin that collect light environment information. Fig. 1 illustrates photoreceptors in plants and their respective light absorption wavelengths.

Plants produce glucose ($C_6H_{12}O_6$) as a carbohydrate from water ($H_2O$) and carbon dioxide ($CO_2$) by using light energy collected by chlorophyll and carotenoid. Glucose is distributed into primary and secondary metabolic pathways.

Among the three types of photoreceptors (phytochrome, cryptochrome, phototropin) that sense the light environment, phytochrome forms flower bud, controls germination, accelerates bud to leaf growth, and controls metabolism. When the phytochrome senses light, genes involved in flower bud formation, germination, and the like are expressed. Expression means that a protein called a gene transcription factor binds to a gene to activate a gene that acts individually. Phytochrome moves into the cell nucleus to control the expressed gene.

Phytochrome is a tissue in which a large number of proteins are aggregated. Phytochromes are classified into Pfr type and Pr type depending on the aggregation state. The Pfr type phytochrome binds to a specific gene transcription factor in the cell nucleus to accelerate the degradation of the gene transcription factor. As a result, the expression levels of the plurality of genes controlled by the gene transcription factor are increased or decreased, and the properties of the cell are changed. Phytochromes of the Pr type are located away from the gene and therefore do not interact with the gene. Thus, Pr-type phytochromes do not change the properties of cells.

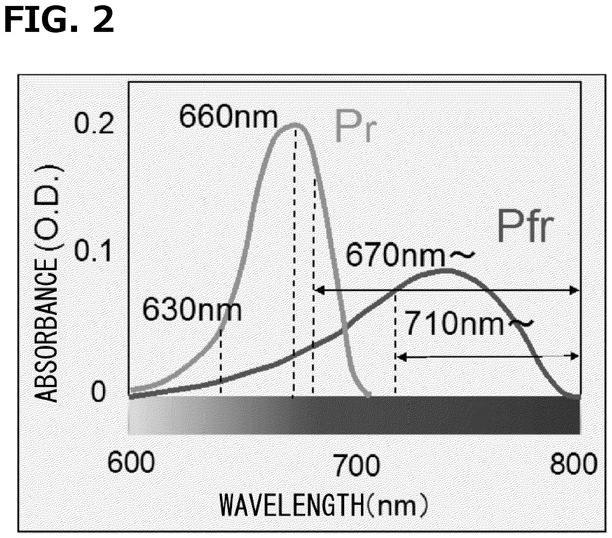

Fig. 2 shows a light absorption spectrum of phytochrome in the red to far-infrared range. Pr-type phytochromes absorb red light from 600 nm to 710 nm. The Pfr-type phytochrome absorbs light in a wavelength range from 600 nm to long wavelengths including red light. In Fig. 2, the vertical axis represents absorbance. In Fig. 2, the absorbance and the optical density (O.D.is also referred to as "optical density") are the same.

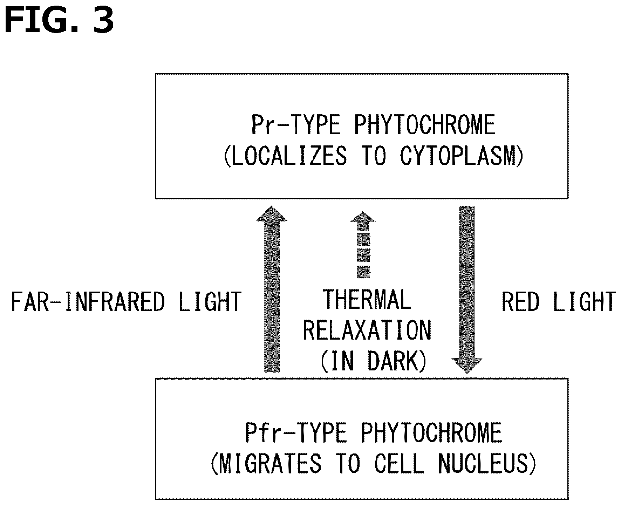

The state of the phytochrome aggregate tissue changes upon absorption of light. Fig. 3 shows a reversible change between Pr type and Pfr type by red light and far-infrared light. When Pr type phytochrome absorbs red light, it changes to Pfr type. Conversely, when Pfr-type phytochrome absorbs far-infrared light, it changes to Pr type.

When red light and far-infrared light in which photosynthesis sufficiently occurs are simultaneously emitted, phytochrome circulates between the Pr type and the Pfr type, and each distribution is in a constant light equilibrium state. In an environment without light, the phytochrome gradually thermally relaxes from Pfr type to Pr type. By irradiation with light having a wavelength longer than 700 nm, conversion from the Pfr type to the Pr type is accelerated. On the other hand, both the Pr type and the Pfr type absorb light having a wavelength of 600 nm to 710 nm. Since the amount of light absorption in this case is larger in the Pr type, in phytochrome, conversion from the Pr type to the Pfr type is dominant.

Phytochrome migrates to the cell nucleus when it becomes Pfr type, but localizes to cytoplasm and becomes foreign when it becomes Pr type. For cells, the foreign phytochrome becomes a stress factor. Therefore, when the phytochrome-induced cellular stress is S, the stress of Pr type is S (Pr type), and the stress of Pfr type is S (Pfr type), these relationships are S (Pr type) > S (Pfr type).

Plants are exposed to environmental stresses such as intense light, high temperature, low temperature, and drought. When some damage occurs to cells due to these environmental stresses, plants produce a variety of antioxidants in metabolic reactions to protect, mitigate, and repair the damage. Ascorbic acid and polyphenols are representative antioxidants, but these are secondary metabolites.

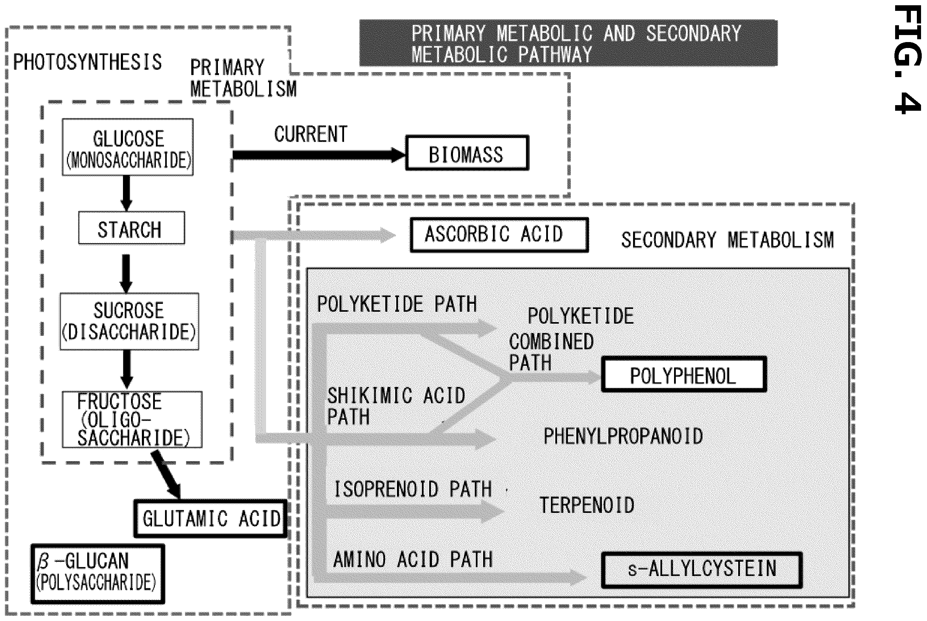

Fig. 4 illustrates a process in which glucose flows into a primary metabolic pathway and a secondary metabolic pathway. Starch, sucrose, fructose, and the like are synthesized in the primary metabolic pathway from glucose synthesized by photosynthesis. A part of these enters the secondary metabolic pathway, and multiple types of secondary metabolites are synthesized. When a plant senses a stress state, a secondary metabolic reaction becomes active, and the production amount of antioxidants such as vitamin C (ascorbic acid), polyphenol, and s-allylcysteine increases.

It is possible to change (control) the distribution ratio and the distribution amount of glucose, which is a photosynthesis product, between the primary metabolic pathway and the secondary metabolic pathway by controlling the stress applied to the plant in the phytochrome aggregate state (Pr type or Pfr type).

In the plant cultivation method according to the present embodiment, in an environment where a plant is grown by sunlight (natural light) or artificial light (main light to be described later) such as an LED, light of which light intensity periodically changes is additionally emitted. Since the added light changes the amino acid aggregate tissue of the phytochrome, the stress state caused by the phytochrome also changes. This can control metabolite production. Hereinafter, the light to be added is also referred to as "additional light". The additional light will be described later.

<<Growth of Plant by Main Light>>

In the present embodiment, sunlight (natural light) or artificial auxiliary light is referred to as "main light" for photosynthesis. This main light is light for directly causing or increasing photosynthesis. The main light is light emitted from sunlight, an LED, or the like, and is mainly responsible for photosynthesis. The "main light" relates to photosynthesis and is light having a photosynthesis photon flux density equal to or higher than a light compensation point, and the "additional light" is light having a photosynthesis photon flux density lower than the light compensation point. The difference between the carbon dioxide absorption rate ($\mu molCO_2$ m$^{-2}$s$^{-1}$) in photosynthesis and the carbon dioxide release rate ($\mu molCO_2$ m$^{-2}$s$^{-1}$) in respiration is the photosynthesis rate ($\mu molCO_2$ m$^{-2}$s$^{-1}$). The photosynthesis photon flux density (PPFD) at which the photosynthesis rate becomes zero is the light compensation point. The value of the light compensation point varies depending on the type of plant. The light of the PPFD exceeding the light compensation point can be referred to as light for photosynthesis, and the main light of the PPFD exceeding the light compensation point can be referred to as main light for photosynthesis.

<<Accelerated Metabolic Growth by Additional Light>>

In the present embodiment, auxiliary light different from main light is artificially created, and the plant is irradiated with the auxiliary light. This auxiliary light is referred to as "additional light". The irradiation of the additional light is performed at a predetermined time or period, which will be described in detail later. The additional light is light for indirectly accelerating photosynthesis.

The additional light stimulates the viability of DNA of the plant, so that photosynthesis can be indirectly accelerated. It is known that plants have a function of integrating light, and plants integrate intensity of sunlight and irradiation time every day. When a decrease in PPFD in main light (PPFD decrease) is detected by the integration function, DNA in chloroplasts of plants issues a command to increase chlorophyll in the optical antenna. As a result, the light absorption amount is increased, and photosynthesis is accelerated.

In the present embodiment, a differentiating function for detecting an intensity change rate of light potentially provided in a plant is utilized. Pulsed light (signal light) that repeats turning on and off at regular time intervals can most efficiently stimulate the differentiating function of plants. Hereinafter, this pulsed light (signal light) is referred to as "additional signal light". The additional signal light is light included in the additional light. In the present embodiment, the plant is irradiated with the additional signal light alone or together with the additional relaxation light.

The additional signal light is insufficient to cause photosynthesis compared to the main light. For this reason, the plant is temporarily recognized to be in a starvation state of photosynthesis. When DNA detects a photosynthesis starvation state, DNA issues a command to increase chlorophyll in order to absorb more light required for photosynthesis. Further, by the additional signal light, the DNA issues a pore opening/closing control command which is an inlet/outlet of the outside air so that the absorption amount of carbon dioxide increases. As a result, the light energy required for photosynthesis and the absorption amount of carbon dioxide are increased by the additional pulsed light irradiation. That is, the additional signal light in the present embodiment functions as a trigger signal for causing the DNA to issue the chlorophyll increase instruction and the pore opening/closing command. The effect of the additional signal light in such a way of thinking is defined as a DNA trigger effect of the additional signal light.

The DNA triggering effect increases in proportion to the number of triggers per time, but does not depend on the strength of the trigger signal. If the time interval of the trigger signal is too short, the DNA triggering effect is reduced. In addition, the photosynthesis accelerating effect by the additional light including the additional signal light can be obtained regardless of the PPFD of the main light.

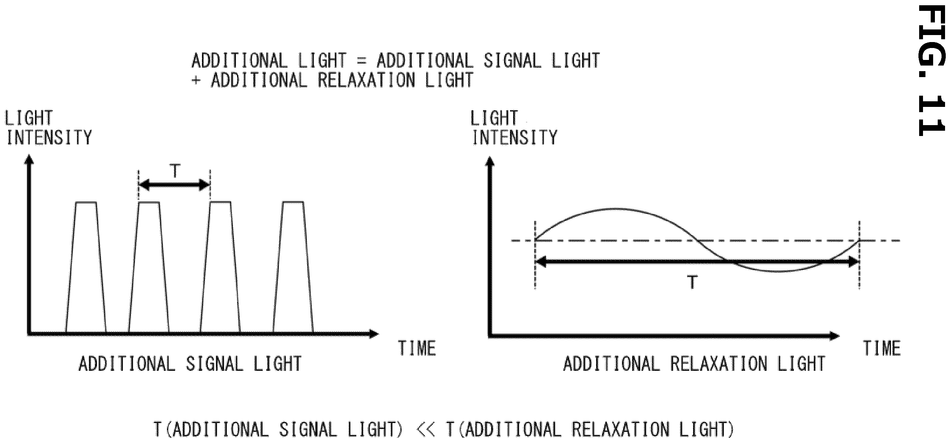

In the present embodiment, in addition to this, light (additional relaxation light) whose light intensity changes more gently than the additional signal light is synthesized with the additional signal light according to a desired photosynthesis accelerating effect. As illustrated on the right side of Fig. 11, the additional relaxation light has a sinusoidal waveform, and the basic cycle is 1 ms or more. The cycle of the additional signal light is 8 $\mu$s < T < 200 $\mu$s, and the basic cycle of the additional relaxation light is 125 to 2 times or more the cycle T of the additional signal light. The additional relaxation light can also be described as light having a waveform with a small change rate (light intensity change rate) related to the slope of intensity as compared with the additional signal light. In addition, the additional relaxation light can also be described as light having a gentler light intensity change rate as a whole as compared with the additional signal light when compared with the additional signal light using the waveform of one cycle as illustrated in Fig. 11. The additional relaxation light is light for alleviating an influence of a side effect (such as suppression of plant growth by strong light stimulation) of the additional signal light whose intensity changes relatively rapidly. Therefore, the temporal change of the additional relaxation light should be gentler than the temporal change of the light intensity of the additional signal light.

As described above, by irradiating the plant with the additional light obtained by combining the additional signal light with the additional relaxation light, the photostress sensed by the plant can be further alleviated as compared with the case where the additional signal light is emitted alone. That is, the additional light of the present embodiment is light that can improve the photostress reduction effect by the additional light as much as possible by combining the additional signal light and the additional relaxation light.

The additional signal light is light that repeats turning-on and turning-off at any cycle. The additional relaxation light is light having substantially constant intensity. In the present embodiment, the additional relaxation light may slightly include a ripple having a frequency of about 60 Hz.

It is considered that the additional signal light of the present embodiment can alleviate the photostress on the plant as compared with the pulsed light of the prior art. However, by adding not only the additional signal light of the present embodiment but also light of another aspect (here, additional relaxation light), the photostress given to the plant by the additional light can be more effectively reduced.

In order to alleviate the photostress caused by the additional signal light as much as possible, it is desirable that the PPFD of the additional relaxation light be equal to or more than that of the additional signal light. The wavelength range (wavelength band) of the additional signal light and the additional relaxation light may be the same or different. In either case, there is a photosynthesis accelerating effect. However, it is desirable that the wavelength band of the additional signal light and the wavelength band of the additional relaxation light have a common portion (overlapping portion) (at least a part of the wavelength band is common).

Plants are sensitive to changes in light intensity over time. Therefore, when the plant is simultaneously irradiated with the additional signal light and the additional relaxation light, the plant preferentially detects the additional signal light. Such plant responses are defined as cocktail party effects in plant light sensing. The cocktail party effect on the additional light is effective even when the main light is emitted.

When photosynthesis weaker than photosynthesis by main light occurs periodically, the plant recognizes that the plant is in a starvation state of photosynthesis, and the DNA issues a command for chlorophyll synthesis of the optical antenna. As a result, the light use efficiency for photosynthesis is improved, and the photosynthesis rate increases even if the PPFD of the main light due to sunlight or artificial light is constant. The increase in photosynthesis rate is also observed when only the additional signal light is emitted.

The photosynthesis accelerating effect and the more stable growth accelerating effect can be obtained by superimposing additional relaxation light that changes more slowly than additional signal light. Since the additional signal light is light that gives a trigger signal to DNA, there is no restriction on PPFD. On the other hand, the PPFD of the additional relaxation light is desirably equal to or more than that of the additional signal light.

For example, in the plant cultivation method of the present embodiment, additional light is emitted during any cultivation period from sowing to harvest in a process of emitting sunlight or artificial light as main light (main light) for photosynthesis. The additional light is at least one of light in which the light intensity periodically changes (additional signal light) and light in which the light intensity slowly changes (additional relaxation light). In some cases, only the additional signal light is emitted as additional light.

The additional light is light that can excite phytochrome, which is a protein photoreceptor. The plant cultivation method of the present embodiment is a plant cultivation method in which the additional light is additionally emitted in any time zone of a day, in which a fluctuation of light intensity (PPFD) of the additional signal light is periodic, a fluctuation cycle is 8 $\mu$s or more and 200 $\mu$s or less, a wavelength of the periodic fluctuation light is 500 nm or more and 2000 nm or less, and a duty ratio of the periodic fluctuation light is, for example, 0.1 or more. These points will be described later.

Pr-type phytochromes are localized in the cytoplasm. When Pr-type phytochrome is changed to Pfr type, it moves so as to approach the cell nucleus. Conversely, when Pfr-type phytochrome changes to Pr type, it moves away from the cell nucleus and is localized in cytoplasm. Therefore, when Pfr-type phytochrome approaching the cell nucleus is converted to Pr type, it moves away from the cell nucleus. Conversely, when Pr-type phytochrome converts to Pfr type, it moves closer to the cell nucleus.

The mechanism by which the additional light with periodically fluctuating light intensity (PPFD) accelerates the conversion of phytochromes is described. As described above, phytochrome is a tissue in which a large number of proteins are aggregated. When amino acids absorb light, the phytochrome aggregate tissue changes locally. In order to efficiently convert the entire amino acid aggregate tissue, it is effective to continuously excite amino acids intermittently.

That is, when one amino acid molecule absorbs light, a hole (positively charged hole generated by removing a negatively charged electron) is generated in the HOMO orbit (highest occupied molecular orbital), and an electron is generated in the LUMO orbit (lowest occupied molecular orbital). As a result, a local electrical neutral state in the amino acid collapses, so that the atomic arrangement of the amino acid molecule is distorted. When this distortion occurs in the entire amino acid aggregate tissue, distortion occurs in the entire amino acid aggregate tissue.

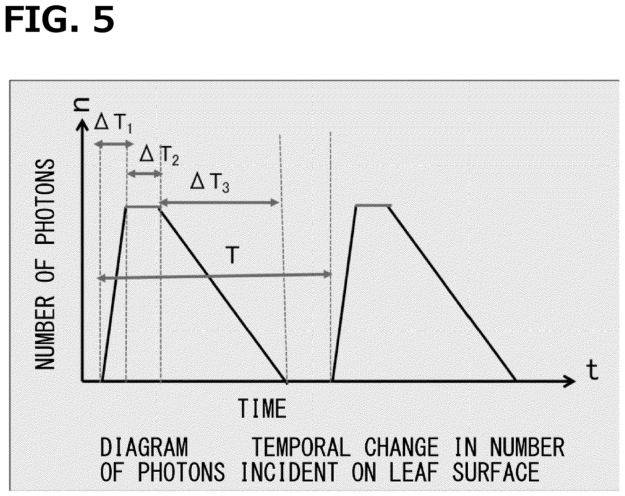

At this time, the deformation of the entire tissue of the amino acid aggregate can be accelerated by irradiation with light (Fig. 5) whose intensity changes steeply rather than irradiation with light having a substantially constant intensity with respect to time. When a cycle of waiting for a certain period of time after instantaneously deforming the amino acid aggregate issue is repeated, a large deformation force can be exerted on the entire amino acid aggregate tissue. Therefore, in order to efficiently convert the entire amino acid aggregate tissue, it is effective to continuously excite the amino acid intermittently.

The Pfr-type phytochrome slowly returns to the Pr type due to thermal relaxation in an environment without light (dark). Therefore, in order to constantly obtain the Pfr-type phytochrome, it is necessary to excite the Pr-type phytochrome in a time zone in which there is no main light for photosynthesis.

The conversion rate of phytochrome between Pr type and Pfr type, and the rate of movement and detachment of phytochrome to and from the cell nucleus according to Pfr type increase in proportion to the number of photoexcitations per unit time. If the time interval of photoexcitation of the phytochrome is too short, it approaches continuous light irradiation, so that the effect of promoting approach and detachment is reduced. Thus, there is a period of light intensity change suitable for most efficiently moving the phytochrome.

Fig. 5 is a diagram illustrating additional light according to the embodiment. The graph in Fig. 5 shows the temporal change of the number of photons incident on the leaf surface (representing photosynthesis photon flux density (PPFD)).

In the present embodiment, the shape of the pulse related to the additional light is trapezoidal. The period (basic period) of the additional light is T, the rise time of one pulse is $\Delta T_1$, the peak time is $\Delta T_2$, and the fall time is $\Delta T_3$. Among them, the light intensities of $\Delta T_1$ and $\Delta T_3$ change with time. The gradients of the temporal change in $\Delta T_1$ and $\Delta T_3$ may be the same or different between $\Delta T_1$ and $\Delta T_3$. Furthermore, the gradient at $\Delta T_1$ or $\Delta T_3$ may be changed in the middle of $\Delta T_1$ or $\Delta T_3$. As a form in which the gradient in $\Delta T_1$ or $\Delta T_3$ is made different in the middle, it is possible to exemplify a form in which the waveform in $\Delta T_1$ or $\Delta T_3$ is curved (bow-shaped, arc-shaped, wavy, etc.), stepped (step-like, stair-like, etc.), or the like.

According to the experiments of the inventors, the photosynthesis accelerating effect by the additional light is favorably obtained when the period T of the additional light is $8\ \mu s < T < 200\ \mu s$. $\Delta T_1$ and $\Delta T_3$ before and after the peak time $\Delta T_2$ are favorably obtained when either one is $5\ \mu s$ or less.

As described above, in the present embodiment, in addition to this, light (additional relaxation light) whose light intensity changes more slowly than the additional light is synthesized with the additional light according to a desired photosynthesis accelerating effect. The basic cycle of the additional relaxation light is 1 ms or more. The cycle of the additional light is $8\ \mu s < T < 200\ \mu s$, and the basic cycle of the additional relaxation light is 125 to 2 times or more the cycle T of the additional light.

As described above, by irradiating the plant with the additional light obtained by combining the additional light with the additional relaxation light, the photostress sensed by the plant can be further alleviated as compared with the case where the additional light is emitted alone. That is, the additional light of the present embodiment is light that can improve the photostress reduction effect by the additional light as much as possible by combining the additional light and the additional relaxation light.

The additional light is light that repeats turning-on and turning-off at any cycle. The additional relaxation light is light having substantially constant intensity. In the present embodiment, the additional relaxation light may slightly include a ripple having a frequency of about 60 Hz.

It is considered that the additional light of the present embodiment can alleviate the photostress on the plant as compared with the pulsed light of the prior art. However, by adding not only the additional light of the present embodiment but also light of another aspect (here, additional relaxation light), the photostress given to the plant by the additional light can be more effectively reduced.

In order to alleviate the photostress caused by the additional light as much as possible, it is desirable that the PPFD of the additional relaxation light be equal to or more than that of the additional light. The wavelength range (wavelength band) of the additional light and the additional relaxation light may be the same or different. In either case, there is a photosynthesis accelerating effect. However, it is desirable that the wavelength band of the additional light and the wavelength band of the additional relaxation light have a common portion (overlapping portion) (at least a part of the wavelength band is common).

The additional light may be emitted in any time zone of 24 hours in one day, or may be emitted in a predetermined time zone. The additional light may be emitted every day, or may be emitted (intermittent irradiation) on days on which the additional light is not emitted. The wavelength of the additional light is in a range of 500 nm to 2000 nm.

<<Stress Caused by External Damage>>

The sprouts of plants immediately after germination synthesize secondary metabolites such as vitamins and polyphenols that are not contained in dried seeds.

The inventors have studied on utilization of stress due to external damage in order to rapidly increase metabolites contained in sprouts and leaves.

In order to utilize stress due to external damage, the sprouts performing photosynthesis are cut from the root, and kept in an environment where moisture does not escape. In this state, photosynthesis is performed for a certain period of time in a light environment similar to that before cutting, and thereafter, the photosynthesis is held for a certain period of time in an environment without light. When cut, sprouts and leaves sense traumatic stress. Then, sprouts and leaves limit translocation of photosynthesis products, while activating secondary metabolism to increase the production of antioxidants with stress defense, mitigation and cell repair effects.

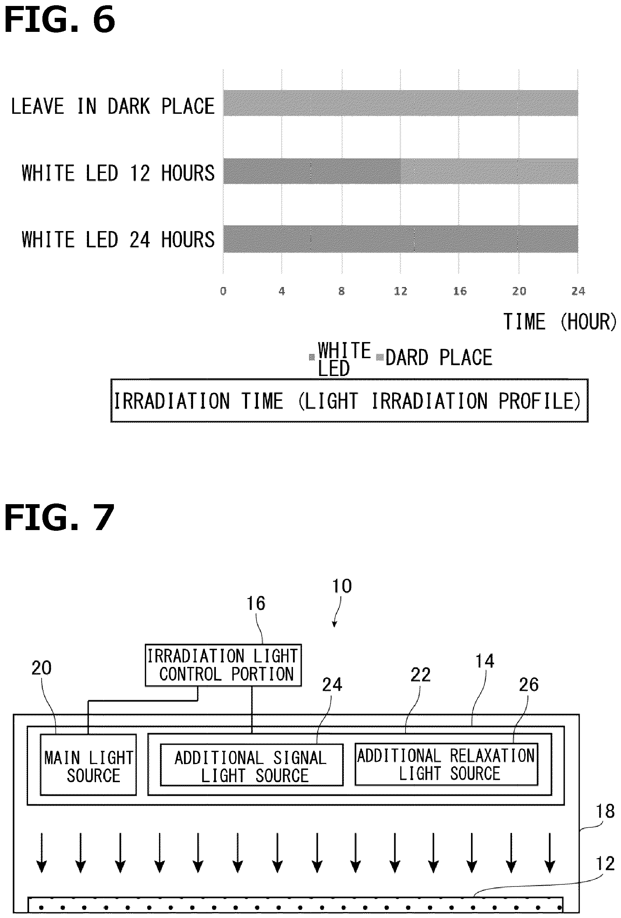

Fig. 6 illustrates a light irradiation profile (light irradiation profile after harvest) in the present embodiment. The light irradiation according to the present embodiment is also referred to as "post-harvest light irradiation" or the like. In order from the top, a light irradiation profile (without light irradiation) when left to stand in a dark place after harvesting, a light irradiation profile when irradiated with a white LED for 12 hours, and a light irradiation profile when similarly irradiated with a white LED for 24 hours are illustrated. The post-harvest light irradiation to the plant is performed by appropriately using the light irradiation of these embodiments.

By the method described above, secondary metabolites contained in the sprouts and leaves can be greatly increased in about 12 hours after harvesting. The secondary metabolism accelerating technique utilizing the traumatic stress is effective for all plants such as sprouts such as barley, broccoli, and garlic, olive, tea, red perilla, and perilla.

The above-described plant cultivation method (plant cultivation method using stress caused by external damage) may be performed alone, or may be performed following plant cultivation using stress caused by phytochrome.

The plant cultivation method according to the present embodiment is effective for photosynthesis of all kinds of plants. Therefore, the present invention can be applied to the growth acceleration of leafy vegetables, root vegetables, flowering plants, fruit trees, seaweeds, algae, and microalgae. Further, the present invention is effective for plant cultivation in a field, a house, a plant factory, a smart cell (Smart cell industry, material production by living organisms), land aquaculture, sea surface, under sea, water surface, under water, and a mountainous area.

<Plant Cultivation Device 10>

Fig. 7 illustrates a schematic configuration of a plant cultivation device 10 of the present embodiment. The plant cultivation device 10 includes a cultivation floor 12 for hydroponics or earthworks, a light irradiation portion 14 that irradiates the cultivation floor 12 with light, and an irradiation light control portion 16 that turns on and drives the light irradiation portion 14. The plant cultivation device 10 includes a protective member 18 which covers the cultivation floor 12 to form a cultivation chamber. It is also possible to omit the protective member 18.

The light irradiation portion 14 includes a main light source 20 that emits main light and an additional light source 22 that emits additional light. The main light source 20 and the additional light source 22 are individually driven and controlled by the control (here, current control) of the irradiation light control portion 16. In Fig. 7, the main light source 20 and the additional light source 22 are illustrated side by side on the left and right. However, the light of the main light source 20 and the light of the additional light source 22 are irradiated toward the cultivation floor 12 through the same path via a diffusion plate (which may be a diffusion lens) (not illustrated). The light of the additional light source 22 may be emitted toward the cultivation floor 12 via an optical fiber (not illustrated). An optical fiber having end surface emission or side surface emission can be appropriately used.

The main light source 20 is continuously turned on within a predetermined time, and continuously emits main light (also referred to as "continuous irradiation light"). As the main light source 20, for example, an artificial light source such as an LED, a fluorescent lamp, a plasma lamp, a mercury lamp, an incandescent lamp, a metal halide lamp, a sodium lamp, an electrodeless lamp, or a pulsed oscillation laser are used.

It is also possible to use sunlight as another main light. When sunlight is used, it is possible not to use the main light source 20 or to omit the main light source 20. It is also possible to use both sunlight and light of the main light source 20. In this case, the sunlight and the light of the main light source 20 may be selectively used according to conditions such as a time zone. Further, sunlight and light from the main light source 20 may be simultaneously emitted.

The additional light source 22 includes an additional signal light source 24 and an additional relaxation light source 26. The additional signal light source 24 emits additional signal light, and the additional relaxation light source 26 emits additional relaxation light. The additional signal light and the additional relaxation light constitute additional light (Fig. 11).

In Fig. 7, the additional signal light source 24 and the additional relaxation light source 26 are illustrated side by side in the left and right direction, but the additional signal light and the additional relaxation light are emitted toward the cultivation floor 12 through the same path via a diffusion plate (which may be a diffusion lens) (not illustrated). The additional light source 22 may be formed by integrating the additional signal light source 24 and the additional relaxation light source 26.

The additional light source 22 can emit light in a wavelength range of 500 nm to 2000 nm by the additional signal light source 24. As the additional signal light source 24, for example, various light sources such as an LED, an EL (electroluminescence), a laser, ultraviolet light, and infrared light can be adopted as long as light having a wavelength suitable for growth of a plant to be cultivated can be emitted. In addition, it is desirable to use a light source that facilitates pulse lighting control as the additional signal light source 24. As the additional relaxation light source 26, for example, various light sources such as a cold cathode fluorescent lamp, an LED monochromatic lamp, and an LED fluorescent lamp driven by a lamp line (50 Hz or 60 Hz) can be adopted.

Although not illustrated, the additional light source 22 may include a light source that emits continuous light and a shutter disposed in the middle of the optical path. In this case, the shutter intermittently blocks the optical path to form signal light. In addition, it is also possible to form light having a necessary wavelength by attaching a wavelength limiting filter to the white light source. The shutter or the filter may be provided in each of the additional signal light source 24 and the additional relaxation light source 26.

The light irradiation portion 14 is installed above a ceiling surface or a side wall of the protective member 18, above a column installed on the cultivation floor 12, or the like. The light irradiation portion 14 illuminates the cultivation floor 12 in accordance with a command from the irradiation light control portion 16.

The light irradiation portion 14 may include a plurality of main light sources 20 and a plurality of additional light sources 22. In this case, the plurality of main light sources 20 and the plurality of additional light sources 22 can be arranged at different positions and at different irradiation angles. For example, the plurality of main light sources 20 and the plurality of additional light sources 22 can be alternately arranged. Furthermore, it is also possible to include a plurality of main light sources 20 and a single additional light source 22 (or a single main light source 20 and a plurality of additional light sources 22). The additional light source 22 may be provided such that the cultivation floor 12 is irradiated with light from a plurality of directions. In this way, a more stable growth accelerating effect can be obtained.

As described above, by providing the plurality of main light sources 20 and/or the plurality of additional light sources 22, denser light irradiation can be performed. By making the arrangement and irradiation angles of the plurality of light sources different from each other, it is possible to uniformly irradiate the plants on the cultivation floor 12 with light, and it is possible to suppress growth unevenness depending on locations.

The irradiation light control portion 16 turns on and drives the light irradiation portion 14 on the basis of the plant cultivation method of the present embodiment. The irradiation light control portion 16 can turn on and drive only the main light source 20, turn on and drive only the additional light source 22, and simultaneously turn on and drive both the main light source 20 and the additional light source 22.

In a case where the light irradiation portion 14 includes a plurality of main light sources 20 and/or a plurality of additional light sources 22, the irradiation light control portion 16 can synchronously turn on the same kind of light sources. When the cultivation floor 12 is divided into a plurality of blocks (test sections), the irradiation light control portion 16 can individually control the main light source 20 and the additional light source 22 in each block.

The irradiation light control portion 16 may synchronize the main light source 20 and the additional light source 22 in units of blocks, or may synchronize the main light source 20 and the additional light source 22 of a plurality of blocks or all blocks. By synchronizing the additional signal light in the additional light source 22, the duty ratio of the additional signal light with which the plant is irradiated can be accurately maintained.

Such a plant cultivation device 10 can be widely applied to a small cultivation kit for easily cultivating a plant in a house in a general home, an agricultural house, a large plant factory having a constructed cultivation room, and the like.

Here, the agricultural house may be an agricultural plastic house in which a film having translucency is stretched over the entire surface of the house, or an agricultural glass house in which a film is stretched and spread over the entire inner surface of a glass window. In an agricultural glass house, air containing moisture in a cultivation space in the house passes through a film and exits the house through a gap between a glass window and a framework portion of the glass window. Therefore, even in an agricultural glass house, it is possible to suppress high temperature and high humidity in the house. The described-above "translucency" means a property of transmitting light necessary for growing a plant in the daytime.

In a case where the light source of the additional light (the additional light source 22 in this case) is installed in an agricultural house, a part of the additional light is reflected and diffused (reflected and diffused) by a glass plate, a resin plate, a resin film, or the like, and thus there is an advantage that irradiation efficiency of the additional light is increased. A similar effect of improving the irradiation efficiency can be obtained even in a small cultivation kit or a plant factory.

The effective irradiation direction of the additional light (additional signal light and/or additional relaxation light) can also be considered. The growth accelerating effect can be obtained in both cases where the additional light is emitted from the same direction as the main light and where the additional light is emitted from a direction different from the main light. Further, when a place where main light does not sufficiently reach (for example, the leaf surface on the front and back sides of the leaf located in the shade, the back surface of the leaf in a place exposed to the sun, and the like) is irradiated with additional light, a larger growth accelerating effect can be obtained.

Specifically, for example, a plant having branches extending in a horizontal direction, such as grapes, is irradiated with additional light in an upward direction (including an obliquely upward direction) from the ground. In this case, the light striking the back side of the leaf (the surface on the ground side) in the shade increases. In addition, photosynthesis is actively performed and the sweet taste of grapes is increased as compared with a case where additional light is not emitted. As described above, by setting the irradiation direction of the additional light according to the environment in which the plant is cultivated, the characteristics of the plant, and the like, the growth of the plant can be more effectively accelerated. For example, in tomato cultivation, it is also effective to provide an optical fiber for side emission in a bush and irradiate the bush with additional light.

<Comparison of Additional Light between Prior Art and Present Embodiment>

Table 1 below shows a comparison between the prior art (technical matters disclosed in Patent Literature 1 described above) and basic technical matters of the plant cultivation method (additional light irradiation) according to the present embodiment.

[Table 1]

| COMPARISON ITEM | PRIOR ART | EMBODIMENTS |
|---|---|---|
| MAIN LIGHT | SUNLIGHT, ARTIFICIAL LIGHT | SUNLIGHT, ARTIFICIAL LIGHT |
| SUNLIGHT, ARTIFICIAL LIGHT | 2 $\mu$s to 500 $\mu$s | 8 $\mu$s to 200 $\mu$s |
| DUTY RATIO OF ADDITIONAL SIGNAL LIGHT | 20% OR LESS | NO LIMIT |
| PPFD OF ADDITIONAL SIGNAL LIGHT ($\mu$mol·m$^{-2}$·s-1) | 0.001~4.0 | NO LIMIT |
| TYPES OF LIGHT ADDED TO MAIN LIGHT | ONE TYPE | TWO TYPES |
| WAVEBAND OF ADDITIONAL LIGHT | 400 nm to 500 nm | 500 nm to 2000 nm |
| IRRADIATION PERIOD | GROWING PERIOD AFTER PLANTING | SOWING - SEEDLING RAISING PERIOD - GROWING PERIOD |
| IRRADIATION TIME ZONE OF ONE DAY | NIGHT | ANY TIME ZONE AMONG 24 HOURS |
| EFFECT | GROWTH ACCELERATION, INCREASE IN USEFUL COMPONENTS | INCREASE IN PRIMARY AND SECONDARY METABOLISM |

As shown in Table 1, the main light is sunlight and artificial light (such as an LED) in both the prior art and the present embodiment. The period of the additional light is 8 $\mu$s to 500 $\mu$s in the prior art, and 8 $\mu$s to 200 $\mu$s in the present embodiment. The duty ratio of the additional light is limited to 20% or less in the prior art, but is not limited in the present embodiment.

The photosynthesis photon density ($\mu$mol·m$^{-2}$·s$^{-1}$) of the additional light is limited to 0.001 to 4.0 in the prior art, but is not limited in the present embodiment. There is only one type of light to be added to the main light in the prior art, and there are two types of light of the additional light and the additional relaxation light in the present embodiment. The wavelength band is 400 nm to 500 nm in the prior art, and 500 nm to 2000 nm in the present embodiment.

The irradiation period is a growth period after fixed planting in the prior art, and is any period (including the entire period) from sowing to a seedling raising period and a growing period in the present embodiment. A period from sowing to planting is defined as a seedling raising period, and a period from planting to harvest is defined as a growing period.

The daily irradiation time zone is a time zone during the nighttime in the prior art, and is any time zone among 24 hours in a day in the present embodiment. The technical effect is to enable acceleration of growth and an increase in useful components in the prior art, and enables individual control of growth and production of useful components in the present embodiment.

In addition, although not described in Table 1, in the prior art, a relatively strong stimulus is given to a plant by pulsed light. In addition, since the wavelength band of the pulsed light is limited to the blue wavelength band, it is difficult for light to reach a hidden leaf in a situation where leaves overlap. Furthermore, it is difficult to individually control growth and secondary metabolism (independently control growth rate and useful substance production).

On the other hand, in the present embodiment, due to the superimposition of the blinking light (additional light) and the slowly changing light (additional relaxation light), the stimulation given to the plant is less than that in the prior art.

The plant cultivation method and the plant cultivation device 10 of the present embodiment can individually control growth and secondary metabolism. The individual control of growth and secondary metabolism can be performed by changing the wavelength or light intensity of the additional light or the additional relaxation light.

Note that the present embodiment is merely an example of implementation in carrying out the present invention, and the technical scope of the present invention should not be interpreted in a limited manner. That is, the present invention can be implemented in various forms without departing from the gist or main features thereof.

<Various Examples of Plant Cultivation Method>

Hereinafter, embodiments of the present invention will be described in detail with Examples. By performing irradiation with additional light under the conditions as in the respective Examples, distribution of glucose generated by photosynthesis accelerated by additional signal light to the primary metabolic pathway and the secondary metabolic pathway can be light-controlled, and further, metabolite production in each metabolic reaction can be controlled. More specifically, the distribution of glucose produced by photosynthesis accelerated by the additional signal light and the additional relaxation light between the primary metabolic reaction pathway and the secondary metabolic reaction pathway can be controlled by the stress caused by the additional signal light, and the production ratio of the metabolite in each metabolic reaction pathway can be controlled by the stress caused by the additional signal light. However, the present invention is not limited by the following description.

<Example 1>

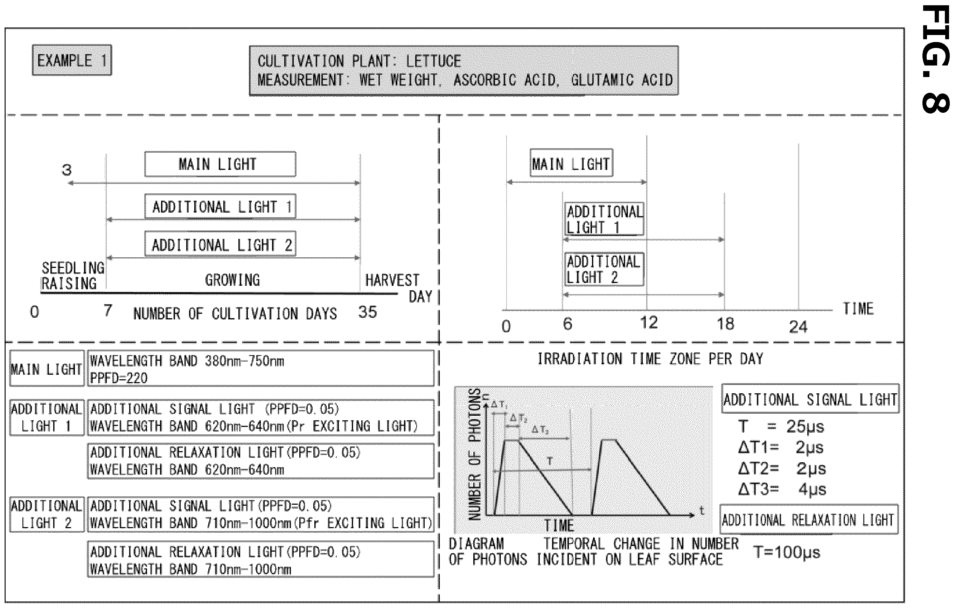

In Example 1, the influence of additional light irradiation on the growth of the lettuce was examined. Fig. 8 shows the conditions according to Example 1 by a diagram of four regions separated by a broken line. The upper left diagram (region) in Fig. 8 illustrates various light irradiation periods and the like, and the upper right diagram (region) illustrates various light irradiation time zones in one day. The lower left diagram (region) illustrates characteristics of various types of light, and the lower right diagram (region) illustrates a change in the number of photons of the additional signal light, a cycle of the additional relaxation light, and the like.

First, seeds of the lettuce were sown on a sponge containing water, stored in a dark place for 3 days, and then irradiated with main light for 7 days (first predetermined period) to grow seedlings. The numerical value "3" indicated at the left end of the arrow related to "main light" in the upper left diagram of Fig. 8 means storage in a dark place for three days (second predetermined period). Similarly, the numerical value "7" on the horizontal axis in the upper left diagram in Fig. 8 means that 7 days (10 days (second predetermined period) in total) have further elapsed after the storage in a dark place for 3 days. Next, the seedlings were planted in a hydroponic cultivation kit and cultivated for 28 days. During cultivation, the temperature and humidity were kept at 22°C and 40 to 50%, respectively. For liquid fertilizer, Hyponex (registered trademark: liquid fertilizer manufactured by Hyponex Japan K.K.) was diluted 1000 times and used.

The lettuce was irradiated with main light and two kinds of additional light (the upper left diagram and the upper right diagram in Fig. 8). The additional light is light obtained by combining the additional signal light and the additional relaxation light.

As illustrated in the upper right diagram in Fig. 8, the main light was emitted from 0:00 to 12:00 and the additional light was emitted from 6:00 to 18:00 during 24 hours in a day. PPFD ($\mu$mol·m$^{-2}$·s$^{-1}$) of each light was 220 for the main light, 0.05 for the additional signal light, and 0.05 for the additional relaxation light as illustrated in the lower left diagram in Fig. 8.

As illustrated in the upper left diagram in Fig. 8, main light was emitted from the third day to 35-th day after sowing, and additional light was emitted from the seventh day to the 35-th day after planting.

Hereinafter, a test in which cultivation is performed only with main light is referred to as a control (hereinafter, it may be abbreviated as "CNT"), and a test in which irradiation with additional light is performed is referred to as a comparative test.

In Example 1, the following two types of comparative tests "1." to "2." were performed (the lower left diagram in Fig. 8).

    1. Comparative Test 1: Irradiation with additional light having a wavelength range of 620 nm to 640 nm
    2. Comparative Test 2: Irradiation with additional light having a wavelength range of 710 nm to 1000 nm

In Comparative Tests 1 and 2 described above, the parameters of the additional signal light 1 and the additional signal light 2 were fixed to the following values (lower right diagram in Fig. 8).

$$T = 25\mu s, \ \Delta T_1 = 2\mu s, \ \Delta T_2 = 2\mu s, \ \Delta T_3 = 4\mu s$$

Here, T, $\Delta T_1$, $\Delta T_2$, and $\Delta T_3$ have the same meanings as those described with reference to Fig. 5.

The cycles of the additional signal light 1 and the additional signal light 2 were 16.7 ms.

On day 35 after sowing, the seeds were harvested, and the wet weight of the portion excluding the roots was measured, and the wet weight ratio was calculated by following Formula (1). The wet weight was determined from the average value of 10 strains.

$$[\text{Harvest wet weight ratio}] = \text{Harvest wet weight of test plot/Harvest wet weight of control (CNT)} \qquad (1)$$

The weights of ascorbic acid (vitamin C) and glutamic acid contained per 1 g of the harvested wet weight of the lettuce were quantitatively analyzed by a high performance liquid chromatography apparatus (hereinafter, an HPLC apparatus). The ascorbic acid ratio (weight ratio) was calculated by Formula (2).

$$[\text{Ascorbic Acid Weight Ratio}] = \text{Ascorbic Acid Weight of Test Section/Wet Ascorbic Acid Weight of Control (CNT)} \qquad (2)$$

The total weight ratio of ascorbic acid contained in the lettuce was calculated by following Formula (3).

$$[\text{Ascorbic Acid Total Weight Ratio}] = [\text{Harvest Wet Weight Ratio}] \times [\text{Ascorbic Acid Weight Ratio}] \qquad (3)$$

The glutamic acid ratio (weight ratio) was calculated by Formula (4).

$$[\text{Glutamic acid weight ratio}] = \text{Glutamic acid weight of test plot/Wet glutamic acid weight of control (CNT)} \qquad (4)$$

The total weight ratio of glutamic acid contained in the lettuce was calculated by following Formula (5).

$$[\text{Glutamic Acid Total Weight Ratio}] = [\text{Harvest Wet Weight Ratio}] \times [\text{Glutamic Acid Weight Ratio}] \qquad (5)$$

Table 2 shows calculation results of a harvest wet weight ratio, an ascorbic acid weight ratio, and a total ascorbic acid weight ratio in each comparative test.

[Table 2]

|  | HARVEST WET WEIGHT RATIO | ASCORBIC ACID WEIGHT RATIO | GLUTAMIC ACID WEIGHT RATIO | ASCORBIC ACID TOTAL WEIGHT RATIO | GLUTAMIC ACID TOTAL WEIGHT RATIO |
|---|---|---|---|---|---|
| COMPARATIVE TEST 1 | 1.3±0.1 | 0.9±0.1 | 1.3±0.1 | 1.2±0.1 | 1.7±0.1 |
| COMPARATIVE TEST 2 | 1.2±0.1 | 1.3±0.1 | 1.0±0.1 | 1.6±0.1 | 1.2±0.1 |

According to Example 1, from the results of the "harvest wet weight ratio", the "ascorbic acid total weight ratio", and the "glutamic acid total weight ratio" representing the ratio to the control (CNT), the irradiation with additional light (additional light irradiation) has an effect of increasing the harvest wet weight of the lettuce. Furthermore, there is an effect of accelerating the production of ascorbic acid synthesized in secondary metabolism and glutamic acid synthesized in primary metabolism. Furthermore, from the results of Comparative Test 1 and Comparative Test 2, the additional light has an effect of accelerating the synthesis of ascorbic acid and glutamic acid. Furthermore, from the results of Comparative Test 1 and Comparative Test 2, the additional light irradiation at a wavelength of 620 nm to 640 nm has a high effect on the acceleration of the synthesis of glutamic acid, and the additional light irradiation at a wavelength of 710 nm to 1000 nm has a high effect on the acceleration of the synthesis of ascorbic acid.

<Example 2>

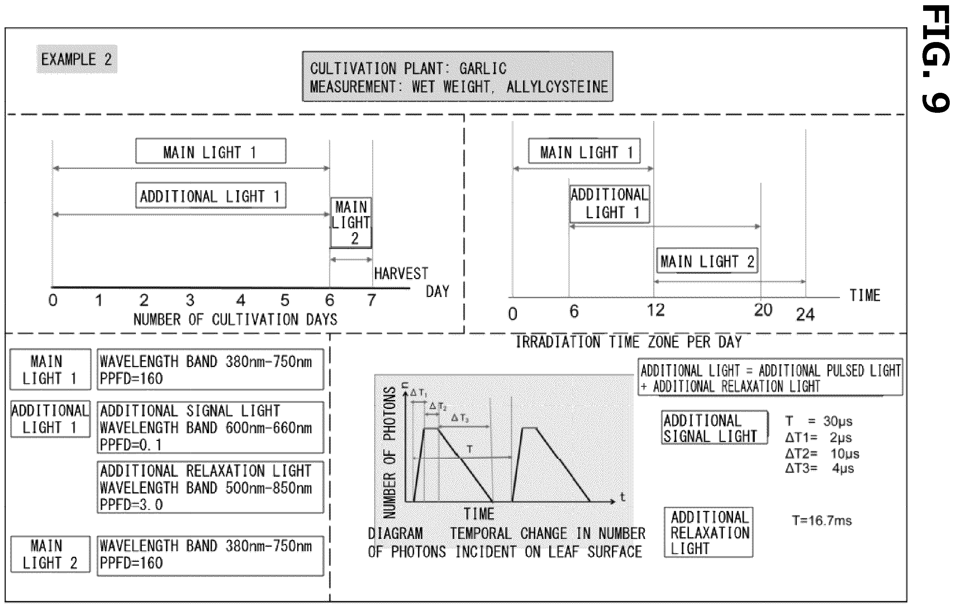

The influence of additional light irradiation on the growth of garlic sprouts and allylcysteine (shown as "s-allylcysteine" in Fig. 4) synthesis, which is a secondary metabolite, was examined. Fig. 9 shows the conditions according to Example 2 by a diagram of four regions separated by a broken line. The upper left diagram (region) in Fig. 9 illustrates various light irradiation periods and the like, and the upper right diagram (region) illustrates various light irradiation time zones in one day. The lower left diagram (region) illustrates characteristics of various types of light, and the lower right diagram (region) illustrates a change in the number of photons of the additional signal light, a cycle of the additional relaxation light, and the like.

First, garlic bulbs were stored at a temperature of 4°C for 1 day and then at a temperature of 20°C for 24 hours. Next, the garlic bulb and one garlic bulb were placed on the moisture-containing rock wool at intervals of one garlic bulb.

The garlic bulb was irradiated with main light 1, additional light 1, and main light 2 (upper left diagram and upper right diagram in Fig. 9). The additional light is light obtained by combining the additional signal light and the additional relaxation light.

As illustrated in the upper right diagram in Fig. 9, the main light 1 was emitted from 0:00 to 12:00, the additional light 1 and the additional light 2 were emitted from 6:00 to 20:00, and the main light 2 was emitted from 12:00 to 24:00 during 24 hours in a day. PPFD ($\mu$mol·m$^{-2}$·s$^{-1}$) of each light was 160 for the main light 1, 0.1 for the additional signal light, 3.0 for the additional relaxation light, 160 for the main light 2 as illustrated in the lower left diagram in Fig. 9.

As illustrated in the upper left diagram in Fig. 9, the main light 1 was emitted from the first day to the sixth day of cultivation, and the additional light was emitted from the first day to the sixth day of cultivation. Main light 2 was emitted for 12 hours immediately after main light 1 was turned off on the sixth day of cultivation.

Hereinafter, a test in which cultivation is performed only with the main light 1 is referred to as a control (hereinafter, it may be abbreviated as "CNT"), and a test in which irradiation with the additional light and the main light 2 is performed is referred to as a comparative test.

The wavelength ranges of the main light 1 and the main light 2 are 400 nm to 750 nm.

In Example 2, the following two types of comparative tests "1." to "2." were performed (the lower left diagram in Fig. 9).

    1. Comparative Test 1: Irradiation with additional light 1 having a wavelength range of 600 nm to 660 nm
    2. Comparative Test 2 Irradiation with additional light and main light 2

In Comparative Tests 1 and 2 described above, the parameters of the additional signal light were fixed to the following values (lower right diagram in Fig. 9).

$$T = 30\mu s, \Delta T_1 = 2\mu s, \Delta T_2 = 10\mu s, \Delta T_3 = 4\mu s$$

Here, T, $\Delta T_1$, $\Delta T_2$, and $\Delta T_3$ have the same meanings as those described with reference to Fig. 5.

In Comparative Test 1 and Comparative Test 2, the basic period of the intensity change of the additional relaxation light was 16.7 ms.

For the control and Comparative Test 1, only the sprouts were cut out (harvested) from the bulb at 14:00 on the sixth day of cultivation. In Comparative Test 2, only the sprouts were cut out (harvested) from the bulb at 14:00 on the sixth day of cultivation, placed in a transparent container maintained at a humidity of 65%, and irradiated with the main light 2.

The harvest wet weight of only the sprouts cut from the garlic bulb was measured, and the wet weight ratio was calculated by following Formula (6). The wet weight was determined from the average value of 20 strains.

[Harvest wet weight ratio] = Harvest wet weight of test plot/Harvest wet weight of control (CNT)     (6)

The weight of allylcysteine contained in garlic sprouts was quantitatively analyzed with a high performance liquid chromatography apparatus (thereafter, an HPLC apparatus). The allylcysteine ratio was calculated by Formula (7).

[Ascorbic Acid Weight Ratio] = Ascorbic Acid Weight of Test Section/Wet Ascorbic Acid Weight of Control (CNT)     (7)

The total weight ratio of allylcysteine contained in garlic sprouts was calculated by following Formula (8).

[Total weight ratio of allylcysteine] = [Harvest wet weight ratio] $\times$ [Allylcysteine weight ratio]     (8)

Table 3 shows calculation results of the harvest wet weight ratio, the allylcysteic acid weight ratio, and the allylcysteine total weight ratio in each comparative test.

[Table 3]

|  | HARVEST WET WEIGHT RATIO | ALLYLCYSTEIC ACID WEIGHT RATIO | ALLYLCYSTEIN TOTAL WEIGHT RATIO |
|---|---|---|---|
| COMPARATIVE TEST 1 | 1.2±0.1 | 1.2±0.1 | 1.4±0.1 |
| COMPARATIVE TEST 2 | 1.2±0.1 | 2.9±0.1 | 3.5±0.1 |

According to Example 2, from the results of the "harvest wet weight ratio" and the "allylcysteine weight ratio" representing the ratio to the control (CNT), the irradiation with additional light (additional light irradiation) has an effect of increasing the harvest wet weight of garlic sprouts and allylcysteine, which is a secondary metabolic component. Furthermore, from the results of Comparative Test 1 and Comparative Test 2, the light irradiation with the main light 2 has no effect of increasing the harvest wet weight but has an effect of increasing allylcysteine as compared with Comparative Test 1.

<Example 3>

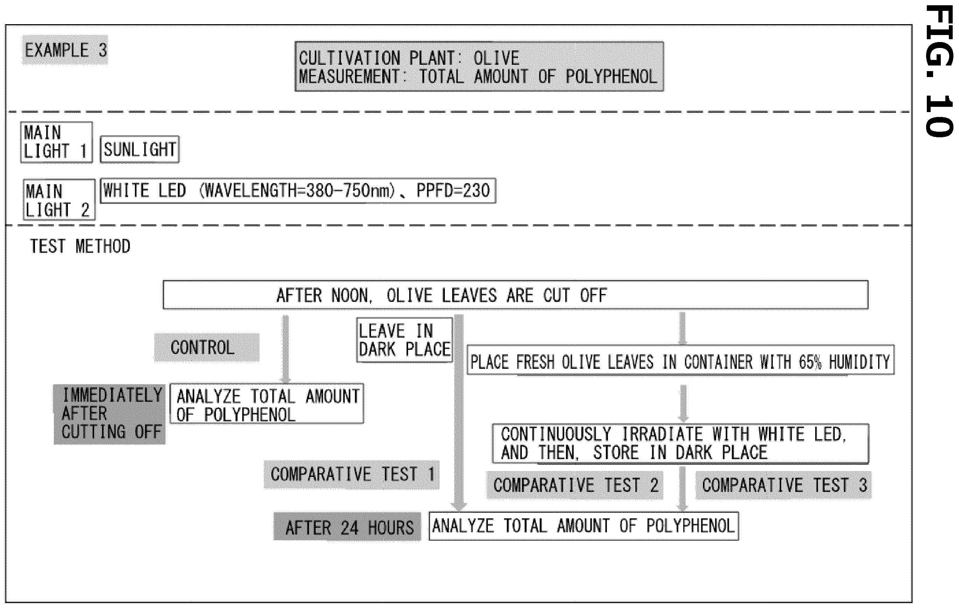

In Example 3, the influence of post-harvest light irradiation on polyphenols contained in olive leaves was examined. Fig. 10 shows the conditions according to Example 3 by a diagram of two regions separated by a broken line. The upper diagram (region) in Fig. 10 illustrates the type of the main light, and the lower diagram (region) illustrates the test method.

Olive was cultivated in the field. The main light 1 is sunlight. Olive leaves were cut off (harvested) at noon (afternoon) on a fine day. The following test was carried out using 200 g of olive leaves.

As shown in the lower diagram of Fig. 10, in the following, the polyphenol quantification test for the freshly cut-off (harvested) olive leaves will be referred to as the control (hereinafter, it may be abbreviated as "CNT") and the test where the cut-off (harvested) olive leaves are irradiated with primary light after 24 hours for polyphenol quantification will be referred to as the comparative test.

In Example 3, the following three types of comparative tests "1." to "3." (Comparative Tests 1 to 3) were performed.

1. Comparative Test 1: Allowed to stand in a dark place for 24 hours

2. Comparative Test 2: Irradiated with the main light 2 having a wavelength range of 380 nm to 770 nm and a PPFD ($\mu$mol·m$^{-2}$·s$^{-1}$) of 230 for 12 hours (first predetermined period), and allowed to stand in a dark place for 12 hours (second predetermined period)

3. Comparative Test 3 Irradiated with the main light 2 having a wavelength range of 380 nm to 770 nm and a PPFD ($\mu$mol·m$^{-2}$·s$^{-1}$) of 230 for 24 hours

For Comparative Tests 2 and 3, the cut-off (harvested) olive leaves were placed in a container with 65% humidity. Thereafter, irradiation with light (main light) of a white LED (wavelength range of 380 nm to 770 nm) was performed, and storage (12 hours in Comparative Test 2 and 24 hours in Comparative Test 3) in a dark place was performed.

The total amount of polyphenol contained in the fresh leaves of olive was quantified by absorbance measurement. The total polyphenol weight ratio was calculated by the following formula (1).

[Total Polyphenol Weight Ratio] = Total Polyphenol Weight of Test Section/Total Polyphenol Weight of Control (CNT)    (1)

Table 4 shows the calculation results of the total polyphenol weight ratio in each comparative test.

[Table 4]

|  | TOTAL POLYPHENOL WEIGHT RATIO |
|---|---|
| COMPARATIVE TEST 1 | 1.1±0.1 |
| COMPARATIVE TEST 2 | 2.3±0.1 |
| COMPARATIVE TEST 3 | 1.4+0.1 |

According to Example 3, from the result of the "total polyphenol weight ratio" representing the ratio to the control (CNT), irradiation with main light immediately after harvesting has an effect of increasing the total polyphenol weight contained in the fresh leaves of olive. From the results of Comparative Test 2, when left to stand in a dark place after the end of irradiation with the main light 2, the effect of increasing the total polyphenol weight is large.

<Light Compensation Point of Each Plant>

The value of the light compensation point of the lettuce is 20 to 30 ($\mu$mol·m$^{-2}$·s$^{-1}$). Although specific data on the light compensation point of barley is not acquired, it can be inferred that since rice is 7 to 15 ($\mu$mol·m$^{-2}$·s$^{-1}$), barley is also 7 to 15 ($\mu$mol·m$^{-2}$·s$^{-1}$). With respect to olives, although no specific data is acquired, the light compensation point of tea is described in the document (Plant Environment Engineering (J. SHITA)24 (1): 16-24. 2012, "Effects of Low Intensity Light Quality on Photosynthesis and Nitrogen Assimilation of Young Tea Plants", Toshikazu Suzuki et al.), the light compensation point is 30 to 50 ($\mu$mol·m$^{-2}$·s$^{-1}$), and the light saturation point is 500 to 850 ($\mu$mol·m$^{-2}$·s$^{-1}$). Therefore, it can be inferred that the light compensation point of the olive is also in the range of 30 to 50 ($\mu$mol·m$^{-2}$·s$^{-1}$).

<Irradiation Timing of Additional Relaxation Light>

As described above, the additional light is at least one of the additional signal light and the additional relaxation light. Therefore, the irradiation of the additional relaxation light does not necessarily need to be performed simultaneously with the additional signal light. Even if the irradiation of the additional relaxation light is performed after the additional signal light (for example, after about ten and several hours from immediately after), the effect of promoting plant cultivation is obtained.

<Utilization of Optical Fiber>

Hitherto, some embodiments have been described regarding the utilization of the optical fiber. By effectively utilizing the end surface light emission and the side surface light emission of the optical fiber, a point light source and a line light source for cultivation can be formed. Furthermore, it is also possible to form a surface light source for cultivation by combining a diffusion plate (which may be a diffusion lens).

As a more specific utilization example of the optical fiber, for example, in the plant cultivation device 10 illustrated in Fig. 7, an example in a case where the plant to be cultivated is arranged at a place separated to some extent from the additional signal light source 24 and/or the additional relaxation light source 26 can be described. In such a case, the light of the additional signal light source 24 and/or the additional relaxation light source 26 can be efficiently emitted on the plant by the optical fibers constituting the optical waveguide.

<<First Basic Utilization Example of Optical Fiber>>

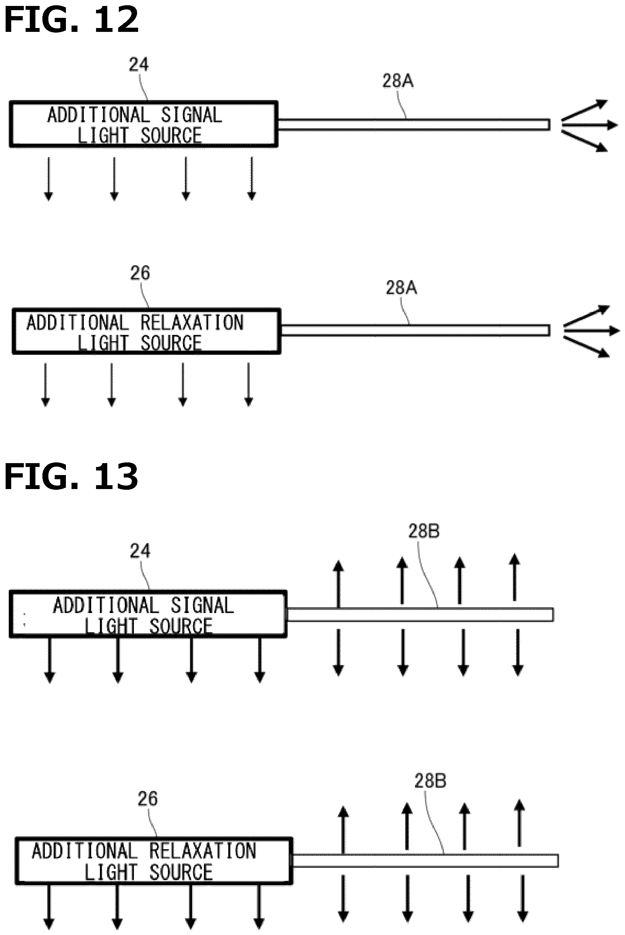

Fig. 12 illustrates an embodiment using an optical fiber (end surface emitting fiber, end surface emitting optical fiber) emitting light from an end surface. **In** the example of Fig. 12, an end surface emitting fiber 28A is connected to each of the additional signal light source 24 and the additional relaxation light source 26. Since the end surface emitting fiber 28A can emit light from the end surface of the fiber, it is possible to guide the light of the additional signal light source 24 and the additional relaxation light source 26 and intensively irradiate a distant plant.

Note that it is also possible to connect an optical fiber (here, the end surface emitting fiber 28A) to one of the additional signal light source 24 and the additional relaxation light source 26 and irradiate the plant with the other light without passing through the optical fiber.

In addition, in Fig. 12, the end surface emitting fibers 28A are illustrated in a linear shape, but the end surface emitting fibers 28A can be used in various forms such as a circular shape, a rectangular shape, a meandering shape, and a spiral shape. In addition, the end surface emitting fiber 28A can be routed not only planarly but also three-dimensionally. The same applies to the optical fibers (side surface emitting fiber 28B, composite optical fiber 29) of Figs. 13 to 16 described below.

<<Second Utilization Example of Optical Fiber>>

Fig. 13 illustrates an embodiment using an optical fiber (side surface emitting fiber, side surface emitting optical fiber) emitting light from a side surface. In the example of Fig. 13, a side surface emitting fiber 28B is connected to each of the additional signal light source 24 and the additional relaxation light source 26. In this case, since light can be emitted in all directions from the side surface of the side surface emitting fiber 28B, it is possible to uniformly irradiate a wide range of plants around the side surface emitting fiber 28B with the light of the additional signal light source 24 and the additional relaxation light source 26.

Here, in a case where the side surface emitting fibers 28B are used, it is possible to irradiate with light substantially uniformly over a wide range. However, strictly speaking, the light intensity of a portion close to the light source (here, the additional signal light source 24 and/or the additional relaxation light source 26) tends to be stronger than the light intensity of other portions. In order to suppress such variation in light intensity, it is effective to block light in a portion close to the light source (a portion in a predetermined range on the light source side of the side surface emitting fiber 28B) with a light shield. In this way, only highly uniform light can be selectively emitted from the side surface emitting fibers 28B. Examples of the light shield include a plate-like light shield having high rigidity and a sheet-like light shield having high flexibility and deformability.

Such side surface emitting fibers 28B are suitable for uniformly emitting relatively weak light in a wide range. As described above, by routing the side surface emitting fibers 28B into a bush of leaves such as grapes and tomatoes and irradiating additional light, light irradiation can be performed as evenly as possible even on a hidden leaf surface.

<<Third Utilization Example of Optical Fiber>>

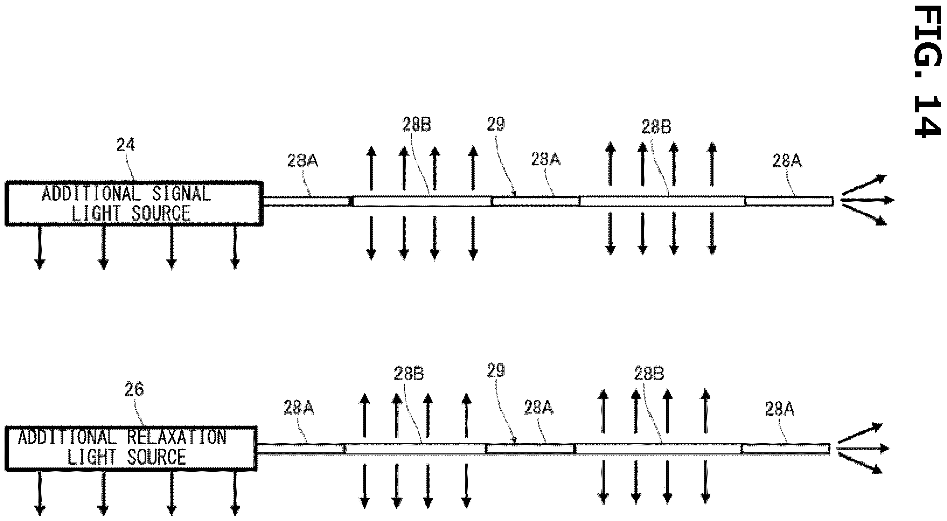

In the example of Fig. 14, the optical fibers connected to the additional signal light source 24 and the additional relaxation light source 26 are composite optical fibers (composite optical fibers). The composite optical fiber 29 is configured by alternately connecting the end surface emitting fibers 28A and the side surface emitting fibers 28B. Both ends of the composite optical fiber 29 in the example of Fig. 14 are constituted by end surface emitting fibers 28A.

By using such a composite optical fiber 29, it is possible to emit additional light without being restricted by the distance from the additional signal light source 24 and the additional relaxation light source 26. Then, the light guide between the additional signal light source 24 and the additional relaxation light source 26 and the light irradiation to the plant can be performed together by the composite optical fiber 29.

<<Fourth Utilization Example of Optical Fiber>>

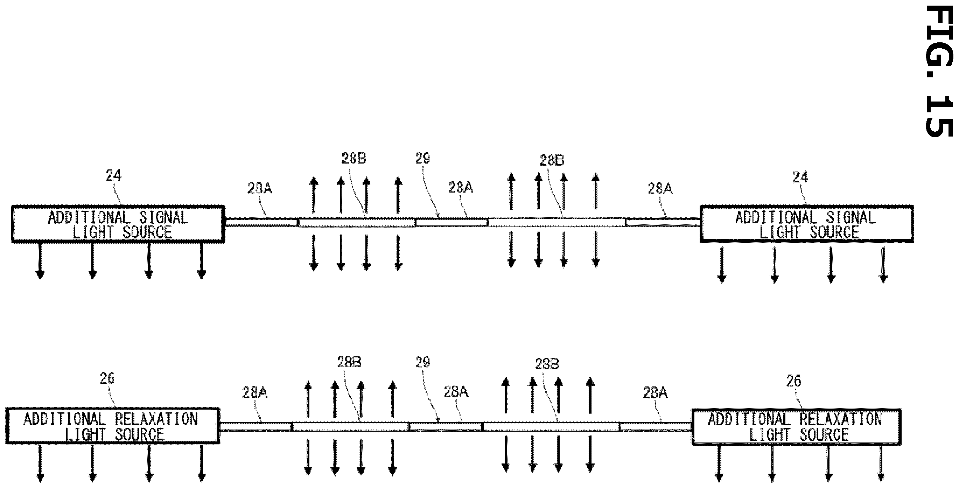

Also in the example of Fig. 15, the composite optical fiber 29 similar to the example of Fig. 14 is used. In the example in the upper part of Fig. 15, each end of the composite optical fiber 29 is connected to a separate additional signal light source 24. The two additional signal light sources 24 cause light of the same wavelength band to be incident on the composite optical fiber 29.

Further, in the example in the lower part of Fig. 15, each end of the composite optical fiber 29 is connected to a separate additional relaxation light source 26. The two additional relaxation light sources 26 cause light of the same wavelength band to be incident on the composite optical fiber 29.

In the side surface emitting fiber 28B of the composite optical fiber 29, the intensity of light emitted from the side surface decreases as the distance from the light source increases. In order to reduce the decrease in the light intensity to be small, it is effective to connect a separate additional signal light source 24 or additional relaxation light source 26 to each end of the composite optical fiber 29 to enhance the additional signal light and the additional relaxation light as in the example of Fig. 15.

In the example of Fig. 15, the same type of additional light (additional signal light or additional relaxation light) is incident from each end surface of the composite optical fiber 29. However, the present invention is not limited thereto, and for example, additional signal light may be incident from one end of an optical fiber (the composite optical fiber 29 in the example of Fig. 15), and additional relaxation light may be incident from the other end. In this way, light obtained by mixing both the additional signal light and the additional relaxation light can be emitted from the side surface emitting fiber 28B.

<<Fifth Utilization Example of Optical Fiber>>

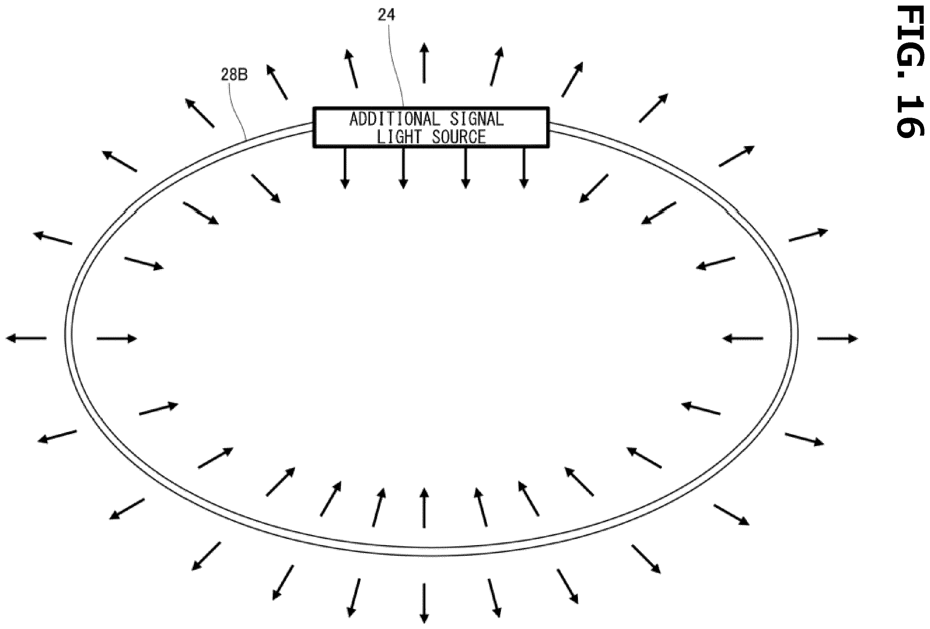

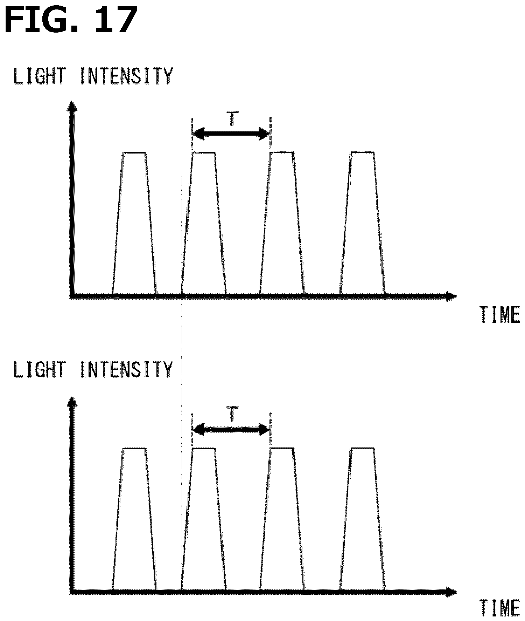

In the example of Fig. 16, the side surface emitting fiber 28B is bent in an elliptical shape, and both ends of the side surface emitting fiber 28B are connected to one additional signal light source 24. The light of the additional signal light source 24 is incident on the side surface emitting fiber 28B from each end of the side surface emitting fiber 28B. The light incident on each end of the side surface emitting fibers 28B is light of the same wavelength band from a common light source, and waveforms indicating the intensity of the light are synchronized as schematically illustrated in Fig. 17.

In Fig. 17, the upper graph illustrates a waveform of light incident from one end portion of the side surface emitting fiber 28B, and the lower graph illustrates a waveform of light incident from multiple ends of the side surface emitting fiber 28B. The horizontal axis of both graphs represents the same time axis, and the light shown by both graphs changes at the same timing and in the same state.

In the experiments of the inventors and the like, in a case where a plurality of light beams is synthesized and irradiated to a plant, as illustrated in Figs. 16 and 17, good growth results are obtained by synchronizing and irradiating lights in the same wavelength band.

Even when a plurality of light beams of different wavelength bands are combined and irradiated so that the intensity changes are synchronized, a good result as in a case where light beams of the same wavelength band are combined is not obtained. In addition, even when light of the same wavelength band is combined and emitted in a state where the intensity changes are not synchronized, a good result as in the case of being synchronized is not obtained. Therefore, it is possible to further accelerate the growth by combining and irradiating light of the same wavelength band such that the intensity changes are synchronized as illustrated in Fig. 17.

Note that the method and device for combining light in a synchronized state are not limited to those illustrated in Fig. 16. For example, as in the example in the upper part of Fig. 15, in a case where separate additional signal light sources 24 are arranged at both ends of the optical fiber (the composite optical fiber 29 in the example of Fig. 15), the light of a plurality of (two in the example of Fig. 15) additional signal light sources 24 may be output such that the intensity changes of the light intensities are synchronized.

In addition, as in the example in the lower part of Fig. 15, in a case where separate additional relaxation light sources 26 are arranged at both ends of the optical fiber (the composite optical fiber 29 in the example of Fig. 15), the light of a plurality of (two in the example of Fig. 15) additional relaxation light sources 26 may be output such that the intensity changes of the light intensities are synchronized.

<Cultivation Performed in Plurality of Stages>

<<Growth of Seedling>>

According to the knowledge of the inventors, the additional light has an effect of accelerating the growth of all kinds of plants. Therefore, when the field is irradiated with the additional light, not only the growth of the plant to be cultivated but also the growth of the plant not to be cultivated may be accelerated. In field cultivation, a plant that is not a cultivation target is generally called a weed. In field cultivation, survival competition between a plant to be cultivated and a weed occurs. When weeds propagate, growth of a cultivation target may be inhibited. In order to prevent this, cultivation is preferably performed in two stages of seedling raising and field cultivation.

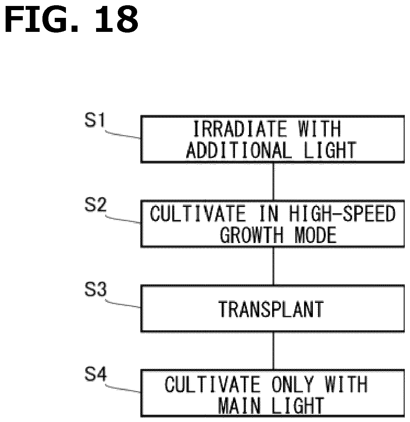

First, in the first stage, during seedling raising, additional light is emitted (step (S)1 in Fig. 18), and seedlings are grown in a high-speed growth mode (S2). Then, in the first stage, after completion of the irradiation with additional light (S1), seedlings are grown in a high-speed growth mode (S2).

Here, the "high-speed growth mode" means a state in which the growth of the plant is accelerated even after the end of the irradiation of the additional light. That is, the photosynthesis accelerating effect continues not only when the additional signal light is emitted but also after the irradiation is completed. Therefore, by irradiation with the additional signal light in any period from sowing to harvest, a growth accelerating effect can be obtained. This is also supported by Examples (Example 2 and Example 5) disclosed in Japanese Patent Application No. 2021-207333 by the inventors and the like.

Subsequently, in the second stage, seedlings grown in a high-speed growth mode are transplanted into a field (S3), and the seedlings are cultivated only with sunlight (or artificial light) which is main light (S4). In this way, only the growth of the plant to be cultivated can be preferentially (selectively) accelerated. In the example of Fig. 18, S1 and S2 belong to the first stage, and S3 and S4 belong to the second stage.

<<Selective Growth of Beneficial Phytoplankton>>

In the above description, algae (including microalgae) is included in the meaning of the term "plant". Plants and algae (including microalgae) are all photosynthetic organisms, and as shown in Table 5 below, there is also a classification for distinguishing between plants and algae (including microalgae). In the classification of Table 5, Euglena belongs to the same classification as the seed plant and the like. In the experiments of the inventors, it has been found that the additional light irradiation is effective for the growth of Euglena (green caterpillar). Euglena is a species of phytoplankton.

More specifically, in general, an organism that performs photosynthesis is classified as a photosynthetic organism. It can be said that a photosynthetic organism is an organism that grows by converting light energy into energy (mainly chemical free energy) in a form that can be used biologically. Photosynthetic organisms can be classified as shown in Table 5.

| PHOTOSYNTHETIC ORGANISM | |
|---|---|
| EUKARYOTE | PROKARYOTE |
| OXYGEN GENERATION TYPE PHOTOSYNTHESIS | PHOTOSYNTHESIS WITHOUT DISCHARGING OXYGEN |

**EP 4 533 937 A1**

(continued)

| PHOTOSYNTHETIC ORGANISM | | |
|---|---|---|
| EUKARYOTE | PROKARYOTE | |
| PHOTOINORGANIC NUTRITION | PHOTOINORGANIC NUTRITION | PHOTOINORGANIC NUTRITION, PHOTOORGANIC NUTRITION |
| [Chl a+b]<br>  SEED PLANTS, FERN PLANTS,<br>  BRYOPHYTES, SHAJIK ALGAE,<br>  GREEN ALGAE, EUGLENA<br>[Chl a+c]<br>  BROWN ALGAE, DOME ALGAE,<br>  GOLDEN ALGAE, DINOFLAGEL-<br>  LATE<br>[Chl a+c+Phy]<br>  CRYPTOALGAE | EUBACTERIA<br>[Chl a+b]<br>  PROKARYOTIC<br>  GREEN ALGAE | CRIMSON SULFUR BACTERIA<br>[BChl a/b]<br>  RED SULFUR BACTERIA<br>  NON-RED SULFUR BACTERIA<br>[BChl a+c/ d/ e/ g]<br><br>  GREEN SULFUR BACTERIA<br><br>  GREEN FILAMENTOUS BACTERIA<br>  HELIOBACTERIA |
| [Chl a+Phy]<br>  RED ALGAE | [Chl a+Phy]<br>  CYANOBACTERIA | ARCHAEA<br>[Rho]<br>HALOPHILIC BACTERIA |
| INSIDE BRACKETS [ ] ARE MAIN PHOTORECEPTOR PIGMENTS.<br>Chl: CHLOROPHYLLS, BChl: PACTERIOCHLOROPHYLLS,<br>Phy: PHYCOBILINS, Rho: RHODOPSINS | | |

As described above, the plant cultivation method (photosynthetic organism production method) according to the embodiment of the present invention is effective for photosynthesis of all kinds of plants such as leafy vegetables, flowering plants, fruit trees, seaweeds, algae, and microalgae. The plant cultivation method (photosynthetic organism production method) according to the embodiment of the present invention is also effective for root vegetables such as potato, carrot, burdock, and Japanese horseradish. Furthermore, the plant cultivation method (photosynthetic organism production method) according to the embodiment of the present invention is effective for plant cultivation in a field, a house, a plant factory, a smart cell (smart cell industry, material production by living organisms), land cultivation, sea surface, under sea, water surface, under water, and a mountainous area. The growth of phytoplankton such as Euglena described above can also be accelerated by additional light irradiation. Furthermore, the plant cultivation device 10 illustrated in Fig. 7 can be referred to as a photosynthetic organism cultivation device, a photosynthetic organism growth device, or the like. Further, "growth" related to a photosynthetic organism can be rephrased as "production".

For example, bivalve mollusks such as clams and cockles feed on phytoplankton. Some phytoplankton have a poison, such as sea sparkle, ceratium, and chattonella. When a clam eats phytoplankton having such a poison, the poison is accumulated in the body, and the clam is poisoned. In addition, the chattonella adsorbs to the gills of the fish and suffocates the fish.

Various phytoplankton inhabit fresh water (lakes, rivers, etc.) and seawater. When fresh water or sea water is irradiated with additional light, not only beneficial phytoplankton but also harmful phytoplankton may grow.

In order to grow only phytoplankton beneficial (non-toxic) to the clam, it is effective to grow phytoplankton in a plurality of stages (for example, two stages). First, as a first stage, useful and fast growing phytoplankton are grown in a specific environment. As a second stage, beneficial phytoplankton are grown in fresh water or sea water.

In the first stage, only beneficial phytoplankton are shifted to a high-speed growth mode (high-speed proliferation mode) by additional light irradiation. In the second stage, the phytoplankton are released into fresh water or sea water. By such an operation, it is possible to grow in fresh water or sea water with preference to phytoplankton having no poison among various kinds of phytoplankton.

In addition, by preventing unnecessary proliferation of phytoplankton, it is possible to prevent occurrence of red tide, whitening of corals, and the like. From these, it is possible to prevent a decrease (exhaustion) in marine resources and to increase marine resources. In addition, by spraying the grown phytoplankton on fresh water or sea water, it is possible to accelerate the growth of marine resources and promote the reproduction of marine resources. Furthermore, it is possible to conserve and improve the water environment by using the water purification function by marine resources such as seashells.

Incidentally, when beneficial algae adhere to corals, corals and algae coexist, and a product (photosynthesis product) by photosynthesis of algae becomes nutrients of corals. That is, algae attached to the calcareous surface in corals perform photosynthesis, and the photosynthesis product is supplied to corals as nutrients. Therefore, when the additional light is applied to the corals, the growth of algae is accelerated, and as a result, the state of the corals is kept good. Then, by selectively proliferating algae of a type beneficial for corals and attaching the algae to corals, it is possible to protect corals.

The growth of photosynthetic organisms by additional light irradiation can also be applied to soil algae. The soil algae mainly include cyanobacteria, green algae, chlorophytes, diatoms, and red algae. By additionally irradiating soil algae with light and spraying one or more selected kinds of soil algae onto the soil, it is possible to perform soil modification. Not only soil algae, but also algae in the hydrosphere can be grown by additional light irradiation and applied to the soil to perform soil modification.

<<Selective Growth of Microalgae>>

The microalgae Euglena and Chlorella store the polysaccharides paramylone (β-1,3-glucan) and triacylglycerol in cells, respectively. Therefore, when Euglena and Chlorella are mixed in the cultivation pond, a process of separating and purifying the respective stored substances is newly required. In order to avoid this, a technique capable of selectively culturing only one of the microalgae is required. For this purpose, it is effective to culture microalgae in two stages.

That is, in a first stage, only one of the Euglena and the Chlorella is shifted to the high-speed growth mode (high-speed proliferation mode). In a subsequent second stage, the microalgae proliferated at a high speed are charged into the cultivation pond. As a result, the number of microalgae in the cultivation pond becomes larger in the microalgae that have shifted to the high-speed proliferation mode in the first stage.

<Microalgae Growth Device 30>

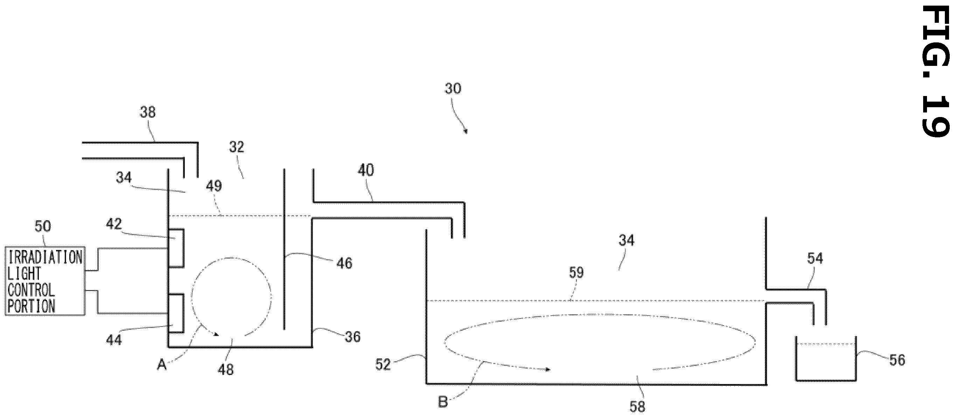

Fig. 19 shows a schematic configuration of a microalgae growth device (microalgae production device) 30 that can be used for stepwise growth of microalgae. The microalgae growth device 30 is a plant cultivation device for cultivation of microalgae, and constitutes a plant cultivation system (or a microalgae growth system). The microalgae growth device 30 in the example of Fig. 19 is a preferential culture device for Euglena. The microalgae growth device 30 can culture Euglena preferentially.

The microalgae growth device 30 includes a front chamber 32 for a first stage and a cultivation pond 34 for a second stage. The front chamber 32 is used to preferentially grow only specific microalgae. The front chamber 32 includes a culture vessel 36, a water introduction pipe 38, a water discharge pipe 40, a main light source 42, an additional light source 44, a partition wall 46, and the like. In Fig. 19, reference numeral 49 denotes a water surface of a culture solution 48 stored in the culture vessel 36.

As the main light source 42, a light source device that can emit main light in the culture solution 48, similarly to the main light source 20 in the plant cultivation device 10 of the example of Fig. 7, is used. As the additional light source 44, a light source device that can emit additional light in the culture solution 48, similarly to the additional light source 22 in the plant cultivation device 10 of the example of Fig. 7, is used. The main light source 42 and the additional light source 44 constitute a light irradiation portion.

The main light source 42 is continuously turned on within a predetermined time, and continuously emits main light (also referred to as "continuous irradiation light"). As the main light source 42, for example, an artificial light source such as an LED, a fluorescent lamp, a plasma lamp, a mercury lamp, an incandescent lamp, a metal halide lamp, a sodium lamp, or an electrodeless lamp is used.

It is also possible to use sunlight as another main light. When sunlight is used, it is possible not to use the main light source 42 or to omit the main light source 42. It is also possible to use both sunlight and light of the main light source 42. In this case, the sunlight and the light of the main light source 42 may be selectively used according to conditions such as a time zone. Further, sunlight and light from the main light source 42 may be simultaneously emitted (used).

Although not illustrated, the additional light source 44 includes an additional signal light source and an additional relaxation light source. The additional signal light source emits additional signal light, and the additional relaxation light source emits additional relaxation light.

The main light source 42 and the additional light source 44 are individually driven and controlled by the control (here, current control) of the irradiation light control portion 50. The additional signal light source and the additional relaxation light source are also individually driven and controlled by the irradiation light control portion 50.

In the culture vessel 36, the culture solution 48 convects as indicated by an arrow A. A device for convection of the culture solution 48 may be installed in the culture vessel 36.

In the culture vessel 36, most of the culture vessel 36 and a portion close to the water discharge pipe 40 are partitioned by the partition wall 46. The culture solution 48 mainly convects inside the partition wall 46.

The water surface 49 of the culture solution 48 reaches the water discharge pipe 40, and the culture solution 48 flows into the water discharge pipe 40. The culture solution 48 passes through the water discharge pipe 40 and flows out to the cultivation pond 34 for the second stage.

The second-stage cultivation pond 34 includes a cultivation container 52, a water pumping pipe 54, and the like. A water pumping bucket 56 is installed below the tip of the water pumping pipe 54. A reference numeral 59 indicates a water surface of the culture solution 58 stored in the cultivation container 52. The water surface 59 reaches the height of the water pumping pipe 54.

In the cultivation container 52, the culture solution 58 convects as indicated by an arrow B. A device for convection of the culture solution 58 may be installed in the cultivation container 52.

Although not illustrated, a light shielding member that shields additional light is installed between the front chamber 32 for the first stage and the cultivation pond 34 for the second stage. As the light shielding member, various curtains and the like can be adopted.

In such cultivation in a plurality of stages, cultivation can be efficiently performed by setting the water environment (for example, the salinity, the degree of nutrients, the temperature (water temperature), the convection speed, the degree of stirring, and the like) between the stages to be the same as possible.

Further, as in the modification of the plant cultivation device 10 (Fig. 7) described above, light of the additional light source 44 may be emitted toward the inside of the culture solution 48 through an optical fiber. An optical fiber having end surface emission or side surface emission can be appropriately used. For example, a side surface light emission optical fiber may be provided so as to circulate around the inner wall surface of the culture vessel 36, and additional light may be emitted from the side surface of the optical fiber toward the inside of the culture vessel 36. In addition, for example, a side surface light emission optical fiber may be arranged at the center of the culture vessel 36, and additional light may be emitted from the side surface of the optical fiber toward the inner wall of the culture vessel 36.

<Example 4>

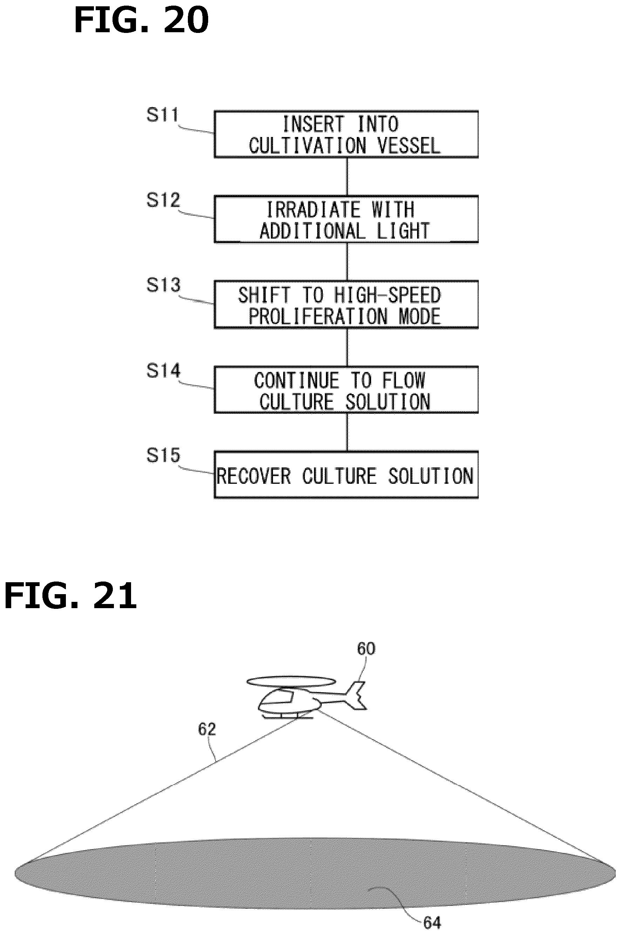

Hereinafter, an example using the microalgae growth device 30 will be described. In the present example, only the Euglena of microalgae was put into the culture vessel 36 (step (S)11 in Fig. 20), and irradiated with main light and additional light (S12). Further, the irradiation of the additional light was stopped, and the Euglena was shifted to the high-speed proliferation mode (S13). Specifically, the irradiation of the additional signal light and the additional relaxation light was terminated, and the Euglena was shifted to the high-speed proliferation mode.

Subsequently, the culture solution (here, water) was continuously caused to flow into the culture vessel 36 for the first stage at a constant flow rate via the water introduction pipe 38 (S14). The inflow amount of the culture solution was about 7 to 10 days, and the culture solution in the culture vessel 36 was totally replaced.

As described above, the culture solution at a constant flow rate was introduced into the culture vessel 36 from the water introduction pipe 38, and the culture solution at the same amount as the inflow amount was caused to flow into the cultivation pond 34 for the second stage via the water discharge pipe 40. In this way, the Euglena in the high-speed proliferation mode was continuously charged into the cultivation pond 34 for the second stage. In the cultivation pond 34, the culture solution 58 was discharged at a constant flow rate through the water pumping pipe 54, and the culture solution 58 containing Euglena was collected in a water pumping bucket 56 (S15). In the example of Fig. 20, S11 to S13 belong to the first stage, and S14 and S 15 belong to the second stage.

Here, cultivation was performed only with main light in the cultivation pond 34. A main light source may be provided in the cultivation pond 34.

At the start of cultivation, 20% or more of diatoms and chlorella were mixed in addition to Euglena in the cultivation pond 34 for the second stage. In the present example, the Euglena in the high-speed proliferation mode became dominant in the cultivation pond 34 as the number of cultivation days (the number of growth days) elapsed. Furthermore, after 20 days from the start of cultivation, 95% or more of the microalgae became Euglena.

As described above, the microalgae growth device 30 of this example was able to preferentially proliferate only specific microalgae Euglena. However, the present invention is not limited to the Euglena. For example, when chlorella is input to the front chamber 32 for the first stage, chlorella occupies a large number of microalgae in the cultivation pond 34 for the second stage. In addition to the microalgae Euglena and chlorella, it is also possible to preferentially proliferate only phytoplankton beneficial for fish and shellfish.

In the experiment by the inventors, in the two-stage cultivation as described above, when the PPFD of the main light is limited to about the light compensation point only for the last short period (for example, 1 to 2 days) in the first stage, the growth in the second stage is remarkably accelerated. At the present stage, the inventors have conducted experiments on lettuce and Euglena.

It is considered that such growth acceleration is caused by the survival instinct of the plant, and the DNA issues an instruction to increase the chlorophyll concentration when detecting that the light becomes dark or the irradiation time becomes short at the end of the first stage.

More specifically, in cultivation in which main light irradiation is repeated at a constant PPFD value every day in a constant irradiation time zone, when the irradiation condition of main light is rapidly changed, plants take countermeasures against environmental variations. For example, when the intensity of the main light is rapidly decreased, the DNA issues an instruction to increase the chlorophyll in order to compensate for the decrease in photosynthesis. Similarly, when the irradiation time is rapidly shortened, the DNA issues a command to increase the chlorophyll. By appropriately using such a defense reaction against an environmental change, a greater growth accelerating effect can be obtained.

In the case of two-stage cultivation, the growth accelerating effect can be increased by rapidly lowering the PPFD value of the main light to, for example, light refocusing in any time zone of the first stage (including the final stage of the first stage). In addition, the growth accelerating effect can be increased by shortening the irradiation time of the main light. Furthermore, even in the second stage, a larger growth accelerating effect can be obtained by rapidly changing the irradiation condition of the main light.

Regarding the increase in chlorophyll, it is not currently clear whether (1) the chlorophyll in the chloroplast itself increases, resulting in the increase in chlorophyll as a whole, (2) the chloroplast increases, resulting in the increase in chlorophyll as a whole, or (3) both of these occur. However, it can be considered that the additional signal light has an effect of increasing the number and size of chloroplasts.

The present inventors expect that the additional light has a high effect of flowing the photosynthesis product into the primary metabolism and the secondary metabolic pathway. The reason is as follows.

In general, when the light intensity is increased to a certain value or more, the photosynthesis amount is saturated. The reason why the photosynthesis amount is saturated is considered to be that the chemical reaction rate reaches the maximum value and the reaction cannot be increased any more. As for the saturation of the photosynthesis amount, the inventors currently expect that there is a mechanism in which photosynthesis products are sufficiently accumulated and the photosynthesis is braked.

If the irradiation with additional light has an effect of increasing the speed at which the photosynthesis product flows to the primary metabolic pathway and the secondary metabolic pathway, there is no problem that the photosynthesis amount exceeds the saturation value. That is, it is possible to strongly estimate that the irradiation with additional light has an effect of increasing the chlorophyll concentration to increase the photosynthesis rate and an effect of increasing the consumption rate of the photosynthesis product.

<Application to Production of Photosynthetic Organisms in a Wide Range>

Plants convert carbon dioxide, which is a cause of global warming, into oxygen by photosynthesis. Plants are located at the beginning of the food chain. Therefore, if the growth of plants can be accelerated on a global scale, it can greatly contribute to recovery of the global environment and improvement of food self-sufficiency. Decarbonization (reduction of carbon dioxide, decarbonization, carbon recycling, etc.) can be effectively promoted by accelerating growth of photosynthetic organisms by irradiation with additional light.

According to the various methods for producing photosynthetic organisms as described above, the growth accelerating effect of the photosynthetic organism by the additional light irradiation can be obtained even when the PPFD value of the additional light is about 1/1 million of the sunlight on the ground surface. The PPFD of direct sunlight in the sun is about 2000 ($\mu$mol·m$^{-2}$·s$^{-1}$), and the PPFD on a cloudy day is about 50 to 100 ($\mu$mol·m$^{-2}$·s$^{-1}$).

Therefore, if the light emission intensity and the light divergence characteristic (also referred to as "diffusion characteristic of light") of the additional light are appropriately selected, even if the additional light source (having the additional signal light source and the additional relaxation light source) is installed (mounted) on an object (moving object) moving in a place away from the photosynthetic organism such as a plant, the growth accelerating effect of the photosynthetic organism can be obtained.

The above-described "moving object" includes various flying objects, ships, land vehicles, and the like. Examples of the flying object include an aircraft (including a passenger aircraft being transported), a helicopter, a drone, a moon surface, and a spacecraft or a satellite orbiting the earth. Examples of the ship include a surface ship and an underwater ship. Examples of the land vehicle include not only agricultural vehicles but also cattle vehicles, environmental maintenance vehicles, and leisure vehicles (including golf carts). By irradiating these moving objects with additional light, the growth accelerating effect of the photosynthetic organism can be obtained.

When an additional light source is installed in a moving object, growth of photosynthetic organisms distributed in a wide range can be accelerated. Examples of the photosynthetic organism include plants that inhabit mountain forests, semimountainous ponds, and grassland areas, seaweeds such as eelgrass and water bloom in the sea and fresh water, and microalgae such as phytoplankton and Euglena. In addition, for example, in a case where additional light is emitted to a reef using a flying object or a ship, it is possible to attach a large amount of algae to the corals. As a result, it is possible to grow corals using photosynthesis products of algae as nutrients, and it is possible to protect and recover the reefs of corals.

By appropriately selecting the wavelength of the additional light, the secondary metabolite contained in the plant can be controlled. In general, the biomass increasing effect increases as the wavelength decreases (the growth accelerating effect increases), and the secondary metabolism accelerating effect increases as the wavelength increases. Therefore, by appropriately selecting the wavelength of the additional light, it is possible to respond to the desire of the cultivation region to greatly increase the harvest weight, the desire of the cultivation region to greatly increase the nutrient component, and the like.

In a case where the additional light source is installed in the moving object, it is effective to combine a device (light divergence angle adjustment device) capable of adjusting the light divergence angle with the additional light source. Examples of the light divergence angle adjustment device include a light convergence lens and a device having a parabolic antenna mirror surface. By installing these light divergence angle adjustment devices and adjusting the light divergence angle, the irradiation range of the additional light can be limited.

In particular, in a case where an additional light source is installed at a remote place from the earth, such as a spacecraft or a moon surface, adjustment of the light divergence angle is important. As a result, even in the case of additional light irradiation from a remote place, growth can be accelerated in a limited target place. Examples of the installation place of the light divergence angle adjustment device include the vicinity of the additional light source, the land and building (optical relay) between the additional light source and the cultivation area, and the vicinity of the cultivation area.

For example, a spacecraft orbiting at an altitude of several hundred kilometers from the earth's surface is moving at a cycle of approximately one and a half hours. Additional light may be continuously emitted from such a spacecraft. Furthermore, the present invention is not limited thereto, and additional light may be emitted only from above a specific place. Since the geostationary earth orbiting satellite is located above a certain earth's surface, when additional light is emitted from the geostationary earth orbiting satellite, an irradiation range of the additional light can be more precisely limited.

Fig. 21 schematically illustrates an example of a state in which the plant 64 is irradiated with the additional light (here, the additional signal light and the additional relaxation light) 62 emitted from the helicopter 60. In Fig. 21, the additional light is enlarged in a circle and emitted, but the irradiation method of the additional light is not limited thereto. For example, it is also possible to linearly scan (reciprocate scan) the spot of the additional light to irradiate a wide range.

<Effect for Each Use of Plant>

The additional light has an effect of accelerating photosynthesis and an effect of accelerating migration of a product (photosynthesis product) by photosynthesis to a primary metabolic pathway (primary metabolic circuit, pathway for primary metabolism) and a secondary metabolic pathway (secondary metabolic circuit, pathway for primary metabolism).

Plants are often used as foods, medicines, fragrance components, and the like. According to the various methods for producing photosynthetic organisms described so far, by irradiating with additional light in addition to main light such as sunlight, it is possible to increase the production of foods, specific medicinal ingredients, aroma ingredients, and the like.

For example, vegetables such as lettuce generally include a bitter taste that children do not like. In the experiment by the inventors, when additional signal light with a wavelength of 500 nm to 600 nm or more was emitted, the bitterness of lettuce could be reduced to an unnoticeable level. This is considered to be because the nitrogen component contained in the vegetable was changed to amino acid, glutamic acid, or the like. As a result, consumers who do not like vegetables can be reduced, and the consumption amount of vegetables can be increased.

The same applies to the coriander. Coriander produced in Japan may be evaluated as having stronger stimulation in taste than those produced in Thailand. However, by irradiation with additional light, stimulation can be reduced, and consumers and consumption amount can be expanded. As described above, the irradiation of additional light increases the sweet taste of the grapes. In the experiments of the inventors, the sweet taste of grapes can be similarly more remarkably increased by irradiation with additional signal light having a wavelength of 500 nm to 600 nm or more.

Based on these findings, it is considered that, for example, the aroma and sweetness of green tea can be increased by irradiation with additional light.

A seedling irradiated with additional light in at least a part of the seedling raising period (a seedling grown in an additional light environment in the seedling raising period) subsequently has a sustained effect of accelerating growth and metabolite production than a seedling not irradiated with additional light. The same applies to a case where cultivation is performed only with main light such as sunlight or white LED light after the additional light irradiation, and a case where the main light and the additional light are emitted. For example, only by irradiating additional light several days before the harvest period and completing the irradiation, it is possible to harvest vegetables with less bitterness, fruits with strong sweetness, and the like at a later date.

The additional light also has an effect of increasing the germination rate and the non-defective product rate of the seed. When the plant is grown in the additional light environment during the period from germination to seedling raising, the effect of accelerating growth and metabolite production is subsequently sustained as compared with the case where the additional light is not applied. The same applies to a case where cultivation is performed only with main light after the additional light irradiation, and a case where the main light and the additional light are emitted.

The additional signal light can control the production of the weight of rice, wheat, or barley seeds, an umami component such as glutamic acid, a medicinal ingredient such as $\beta$-glucan, pungent or aromatic components of herbs such as herbs or coriander.

Therefore, according to the various methods for producing photosynthetic organisms described so far, it is possible to cultivate seedlings such as lettuce, tomato, and rice plants having a faster growth rate than the conventional methods, fruits such as grapes and peaches having a high sugar content, herbs having a large amount of medicinal ingredient, herbs having a reduced pungent taste, herbs having a large amount of aromatic ingredient, indigo tata and red perilla containing a large amount of pigment ingredient, and the like as annual herbs (annual plants).

In order to selectively increase the production of secondary metabolic components such as ascorbic acid (vitamin C), β-carotene (precursor of vitamin A), polyphenol, and s-allylcysteine contained in plants, phytochrome, which is a protein receptor, may be selectively excited as mainly described based on Figs. 1 to 10.

There are two types of phytochromes, Pr type and Pfr type, depending on the assembly form of proteins. The Pr type shifts to the Pfr type by photoexcitation. Conversely, the Pfr type shifts to the Pr type by photoexcitation.

The Pr-type phytochrome has an effect of accelerating the production of ascorbic acid among secondary metabolites. On the other hand, Pfr-type phytochrome has an effect of accelerating the production of polyphenol and β-carotene which are secondary metabolites other than ascorbic acid, s-allylcysteine which is a medicinal ingredient of garlic, and the like. Utilizing these properties makes it possible to control the production of secondary metabolites while accelerating growth.

In addition to phytochrome, protein receptors contained in photosynthetic organisms such as plants include phototropin involved in movement of photochlorophyll, phototropism, and pore opening and closing, and cryptochrome involved in flowering time and light-avoidance reaction. By selectively exciting these protein receptors by additional signal light, it is possible to further precisely control the growth rate and secondary metabolite production.

The additional signal light includes the light absorption wavelength band of the red light receptor in the photosynthetic organism, so that the stress of the photosynthetic organism can be reduced. Then, the components in the photosynthetic organism (the content components of the photosynthetic organism) can be greatly changed, and the growth of the photosynthetic organism can be accelerated.

According to experiments and findings by the inventors, it is possible to increase polyphenols of strawberries and fruit trees and carotenoids of tomatoes and the like. In addition, for Euglena, the amount of paramylon and polyphenol can be increased. Furthermore, the effect of accelerating the growth of Arabidopsis thaliana in which gene information is completely decoded is also exhibited.

<Example 5>

Hereinafter, examples relating to the germination rate when the seeds of plants are irradiated with additional light will be described. In this example, the inventors sowed the seeds of the lettuce on the sponge containing water. The sponge was cut and seeds were placed one by one in the cut (seeded). These sponges were held in a dark place for 2 days, and then grown on a seedling raising rack for 7 days.

In the cultivation shelves, raising growing was performed using two kinds of samples: a control in which only main light was irradiated; and a test section in which main light was irradiated with additional signal light and additional relaxation light. The number of sponges containing (placing) seeds was 30 (60 in total) in each of the control and the test section. One seed was placed in one sponge.

A white LED was used as main light. The LED for main light was continuously turned on for 14 hours from 8:00 among 24 hours a day, and then turned off for 10 hours. The PPFD of the white LED was set to 130 ($\mu$mol·m$^{-2}$·s$^{-1}$).

The wavelength of the additional signal light was 350 nm to 420 nm, and the PPFD was 0.005 ($\mu$mol·m$^{-2}$·s$^{-1}$). The wavelength of the additional relaxation light was 350 nm to 420 nm, and the PPFD was 0.01 ($\mu$mol·m$^{-2}$·s$^{-1}$).

The parameters of the additional signal light were T=30 $\mu$s, $\Delta T_1$=2 $\mu$s, $\Delta T_2$=3 $\mu$s, and $\Delta T_3$=25 $\mu$s. Both the additional signal light and the additional relaxation light were irradiated for 10 hours from 14:00 among 24 hours a day.

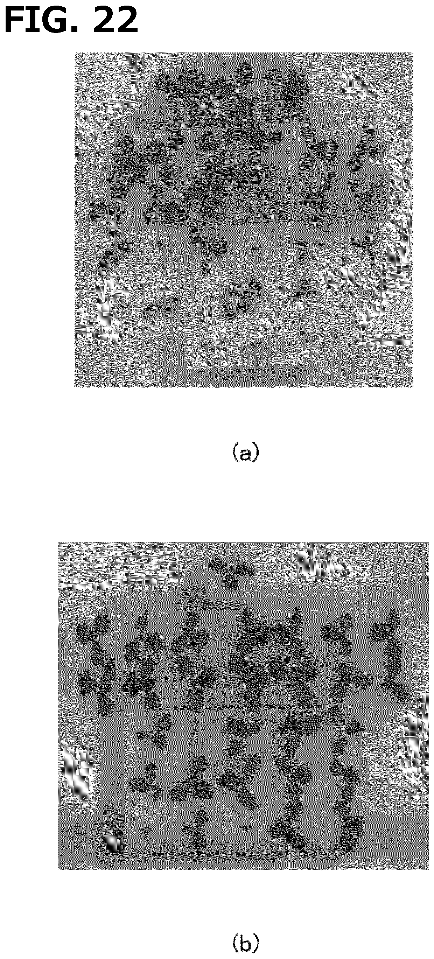

Fig. 22(a) shows an image of a photograph of the germination state of a control, and Fig. 22(b) shows an image of a comparative photograph of the germination state of a test section. As compared with the control (Fig. 22(a)), the leaves of the lettuce in the test section (Fig. 22(b)) are grown larger (on average) as a whole.

The number of sprouts was 21 out of 30 in the control (Fig. 22(a)) and 27 out of 30 in the test section (Fig. 22(b)). The good seed rate (the rate of seeds germinated in a good state) was 70% in the control and 90% in the test section.

As a criterion for germination, when three leaflets of the lettuce appeared, it was determined that the lettuce germinated well. This is because it is known that the lettuce having two or less leaflets does not grow smoothly thereafter when nine days have elapsed from sowing.

According to the present example, the additional signal light having a wavelength of 350 nm to 420 nm has an effect of accelerating germination of the lettuce. Then, for example, by selling pre-germinated seeds irradiated with main light added with additional signal light and additional relaxation light to a consumer, it is possible to supply the seed market with seeds that germinate larger on average.

<Growth Acceleration and Deceleration>

So far, it has been described that the irradiation with additional light is used for growth and acceleration of metabolism. However, for example, the additional signal light having a red wavelength decreases the growth rate and accelerates the production of secondary metabolites. That is, the specific additional signal light has an effect of reducing the growth of the photosynthetic organism.

In recent years, in large-scale farms of lettuce and the like, equalization of harvest times is required. This is because it is difficult to secure workers (secure labor) when the harvest time is concentrated.

In addition, in a place close to a street lamp, so-called "light damage" in which growth of weeds, rice plants, and the like is accelerated occurs.

Furthermore, the pyrethrum which is a short-day plant starts to flower when the day length becomes short. In order to delay such flowering, irradiating the pyrethrum with yellow or red light is performed at night. Such cultivation that performs light irradiation is called "lighting" or "lighting cultivation".

By increasing the wavelength of the additional light, more photosynthesis products can flow through the secondary metabolic circuit than the primary metabolic circuit. When such a property is used, growth can be decelerated (growth deceleration).

For example, it is possible to consider a photosynthetic organism production method or a plant cultivation method in which an additional signal light for growth promotion (growth accelerating additional signal light) is emitted at an early stage of growth, and an additional signal light for accelerating secondary metabolism (growth decelerating additional signal light) is emitted at a time when harvest is approaching (final stage of growth).

By adopting such a method, the secondary metabolic components can be increased without changing the harvest weight. Furthermore, the sugar mass can be reduced. The method of performing growth deceleration (growth deceleration method) is particularly effective for leafy vegetables such as lettuce, Japanese mustard spinach, and spinach, and vegetables such as cabbage, Japanese ginger, and onion. Vegetables including leafy vegetables also contain carbohydrates. Accelerated conversion of carbohydrates to secondary components in vegetables reduces the weight of the vegetables.

Such a photosynthetic organism production method and a plant cultivation method are one type of a method for producing a photosynthetic organism in a plurality of stages and a method for cultivating a plant in a plurality of stages. In this case, it is possible to perform growth acceleration in the first stage and to perform growth deceleration in the second stage.

By adopting these methods, it is possible to prepare a device for growth acceleration (photosynthetic organism production device, plant cultivation device).

In the experiment conducted by the inventors, the effect of changing the number of cultivation days in the case of combining growth acceleration and growth deceleration was about $\pm20\%$. For this reason, for example, when the photosynthetic organism is usually harvested in four weeks, it is possible to harvest in three weeks by acceleration of growth, and it is possible to harvest in five weeks by deceleration of growth. Further, it is also possible to harvest a photosynthetic organism in, for example, four weeks by combining growth acceleration and growth deceleration.

<Growth Acceleration of Cannabis Plant>

Irradiation with additional light is also effective for cannabis plant (annual herb of Cannabis genus Cannabaceae family). The leaves and spikes of cannabis plant contain secondary metabolic components such as tetrahydrocannabinol having a pharmacological action. Irradiation with additional light can increase the content of tetrahydrocannabinol in the cannabis plant. Also for the leaves of the cannabis plant, when considered in the same manner as the red perilla, both the leaf weight and the content rate of the secondary metabolic component can be increased. It is contemplated that it is possible to purify about 2 times as much tetrahydrocannabinol as the ratio of tetrahydrocannabinol to control. The content of tetrahydrocannabinol is calculated as follows: leaf weight (1.6 times) $\times$ content (1.2 times).

<Improvement in Usability>

As in the plant cultivation device 10 illustrated in Fig. 7 and the microalgae growth device 30 illustrated in Fig. 19, it is desirable to devise a device for improving operability and usability from the viewpoint of user friendliness with respect to a device that emits additional light.

For example, an operator (user) operating the device inputs information (name information or the like) on a photosynthetic organism such as a plant to be grown by operating a predetermined input portion. Examples of the input portion include a mobile terminal such as a smartphone or a tablet terminal. Examples of the input portion also include a dedicated operation panel and a notebook personal computer (PC).

The input result to the input portion is input to, for example, the irradiation light control portion 16 of the plant cultivation device 10 illustrated in Fig. 7. The irradiation light control portion 16 searches for identification information (ID information) of the input photosynthetic organism, and refers to information (irradiation condition information) of the irradiation condition associated with the identification information. The irradiation light control portion 16 outputs a signal for driving the additional signal light source 24 based on the irradiation condition information referred to. The irradiation light control portion 16 also outputs a signal for driving the additional relaxation light source 26 as necessary.

In addition, as another embodiment, the input portion may be an imaging device such as a camera, and the photosynthetic organism (plant or the like) may be imaged by the camera. In this case, the irradiation light control portion 16 determines the type of the captured photosynthetic organism from the image information acquired by the camera. The type of a photosynthetic organism can be determined by artificial intelligence that has obtained information of a determination criterion in advance by machine learning or the like.

The irradiation light control portion 16 refers to the irradiation condition information associated with the identification information of the photosynthetic organism. The irradiation light control portion 16 outputs a signal for driving the additional signal light source 24 and the additional relaxation light source 26 based on the irradiation condition information referred to.

The identification of the photosynthetic organism and the additional light irradiation according to the identified photosynthetic organism can also be applied to the microalgae growth device 30 illustrated in Fig. 19. The present invention can also be applied to a photosynthetic organism production device of a type different from the plant cultivation device 10 illustrated in Fig. 7 and the microalgae growth device 30 illustrated in Fig. 19.

<Solving Social Problems by Accelerating Growth of Photosynthetic Organisms>

A method for producing a photosynthetic organism according to an embodiment of the present invention accelerates growth of a photosynthetic organism, and can solve various social problems. For example, since the period required for plant cultivation can be shortened, the number of man-hours required for plant cultivation can be reduced. Furthermore, for example, the burden on the worker engaged in cultivation can be reduced. In addition, the heating cost of the greenhouse (agricultural house) can be reduced.

Since the burden on the worker can be reduced, it is possible to appropriately redistribute the labor force. This can contribute to elimination of the shortage of workforce and the shortage of manpower.

Furthermore, for example, as compared with a cultivation method in a plant factory in which a plant is constantly irradiated with artificial light, the time for light irradiation can be shortened, and the amount of energy required for growth acceleration can be reduced. That is, as described above, the photosynthesis accelerating effect continues not only when the additional signal light is emitted but also after the irradiation is completed. Therefore, it is not necessary to always emit additional light, and there is little time restriction. Then, if additional light is emitted in a limited short period of time, growth can be accelerated. Therefore, the amount of energy consumed for accelerating growth can be reduced.

Furthermore, effects can be expected for reduction in utility costs of artificial light-type plant factories, improvement in productivity of solar sharing agriculture, and the like.

Since the harvest amount of vegetables and fruits increases, it is possible to obtain a large harvest from small seeds and seedlings. As a result, it is possible to improve the food self-sufficiency rate in each country in which the present invention is implemented, which contributes to solving food shortage and food crisis.

In the experiments of the inventors (including the experiments according to the respective Examples), an increase in the harvest amount of at least about 20% can be expected. When additional light irradiation is performed on a plant that becomes food, it is possible to increase food by about 20%. There is also an experimental result that the components of the secondary metabolites increase about 1.5 to 2 times overnight. Therefore, it is possible to rapidly increase food.

Furthermore, the cultivation of plants can be efficiently performed, and plants can be grown even in countries and lands where conditions related to plant cultivation are not good. For this reason, the demand for plant transportation to areas and countries far from the cultivation area decreases. As a result, the food mileage is reduced, and the transportation cost and the distribution cost of the plant can be reduced. Since the transportation cost and the distribution cost include the energy cost of the transportation facility (aircraft, ship, vehicle, and the like), the energy cost of the transportation facility can also be reduced.

In addition, local production of plants for local consumption can be promoted, and this can also reduce transportation costs and distribution costs.

It is possible to more reliably accelerate the growth of plants in a wide range even in the case of desert greening.

In accelerating growth, a large amount of carbohydrate is consumed. Therefore, low-carbohydrate plants can be cultivated. Then, low-carbohydrate vegetables and the like are provided to the consumer, and the consumer can maintain good health.

From these, it is possible to solve many social problems such as reduction of greenhouse gas emissions, securing of consumption resources, suppression of deforestation, sustainable development of agriculture, realization of a green society, and achievement of SDGs (sustainable development goals).

Furthermore, in recent years, various measures such as a carbon tax, an emission amount transaction, a credit transaction, and a carbon border adjustment measure have been studied in each country and international society in order to achieve carbon neutral. The growth of photosynthetic organisms by irradiation with additional light can activate studies on these measures.

For example, Euglena absorbs about 10 times as much carbon dioxide as a forest when compared to the same area. In addition, Euglena contains Paramylon, and Paramylon is also used for purifying jet fuel. Further, by the irradiation of the additional light, carbon dioxide is absorbed in plants such as lettuce by about twice the conventional amount. Therefore, the growth of the photosynthetic organism by the irradiation of the additional light can greatly contribute to carbon neutral and realization of various measures.

Furthermore, growth of photosynthetic organisms by irradiation with additional light makes it possible to provide a carbon dioxide absorbing device. The carbon dioxide absorbing device includes at least a photosynthetic organism and an additional light irradiation device. A carbon dioxide absorbing device that emits additional light increases absorption of carbon dioxide by a photosynthetic organism.

Also in the carbon dioxide absorbing device that emits additional light, the photosynthetic organism performs photosynthesis by main light such as sunlight. The additional light irradiation device includes an additional signal light irradiation portion and an additional relaxation light irradiation portion, and irradiates the photosynthetic organism with additional signal light or additional relaxation light according to a situation. Photosynthesis of a photosynthetic organism by main light is accelerated by irradiation with additional light. The carbon dioxide absorbing device can include a main light irradiation device that irradiates artificial main light in addition to the additional light irradiation device.

Such a carbon dioxide absorbing device also functions as a carbon neutral propulsion device that accelerates realization of carbon neutral.

<Inventions Extractable from Embodiments and Examples>

(1) A plant cultivation method including performing irradiation with main light (such as sunlight, artificial light) for photosynthesis and additional light for accelerating photosynthesis of a plant by the main light in at least a part of a cultivation period from sowing to harvest, in which the additional light includes additional signal light of which light intensity periodically fluctuates and additional relaxation light of which light intensity changes more slowly than the additional light, and a wavelength (such as 500 to 2000 nm) of the additional signal light includes a light absorption wavelength band (such as a wavelength ban of 600 nm or more) of a red light receptor (such as Pr-type phytochrome, Pfr-type phytochrome) in the plant.

(2) The plant cultivation method according to (1), in which a leaf or a bud of a plant is cut off from a root, a branch, or a stem, only the leaf or the bud is irradiated with the main light for a certain period of time (such as a first predetermined period of time), and then the leaf or the bud is held in a dark place for a certain period of time (such as a second predetermined period of time).

(3) A plant cultivation device (such as the plant cultivation device 10) which is irradiated with main light (such as sunlight, artificial light) for photosynthesis of a plant, the plant cultivation device including:

an additional light source (such as the additional light source 22) configured to emit additional light for accelerating photosynthesis of a plant by the main light; and
an irradiation light control portion (such as the irradiation light control portion 16) capable of driving and controlling the additional light source,
in which the additional light source comprises:

an additional signal light source (such as the additional signal light source 24) configured to emit additional signal light of which light intensity periodically fluctuates; and
an additional relaxation light source (such as the additional relaxation light source 26) configured to emit additional relaxation light of which light intensity changes more slowly than the additional light,
the additional relaxation light together with the additional signal light are irradiated; and
the wavelength (such as 500 to 2000 nm) of the additional signal light includes a light absorption wavelength band (such as a wavelength band of 600 nm or more) of a red light receptor (such as Pr-type phytochrome, Pfr-type phytochrome) in the plant.

(4) The plant cultivation method according to (1), including a first stage of performing cultivation with the additional light; and

a second stage of performing cultivation with the additional light irradiation stopped.

(5) The plant cultivation method according to (4), in which the second stage is performed by moving a plant from a place where the first stage is performed to another place.

(6) The plant cultivation method according to any one of (4) and (5), in which a cultivation target is selected from the group consisting of seedlings, phytoplankton, and microalgae.

(7) The plant cultivation device according to (3), in which the device performs

cultivation of a first stage of performing cultivation with the additional light; and
cultivation of a second stage of performing cultivation with the additional light irradiation stopped.

(8) The plant cultivation device according to (7), in which the second stage is performed by moving a plant from a place where the first stage is performed to another place.

(9) The plant cultivation method according to (1), in which a cultivation target region (such as a region where a cultivation target plant exists) is irradiated with the additional light from a moving object (aircraft, helicopter, drone, moon surface, spacecraft and satellite orbiting the earth, ship, land vehicle, and the like).

(10) A method for producing a photosynthetic organism including performing irradiation with main light (such as sunlight, artificial light) for photosynthesis and additional light for accelerating photosynthesis of a photosynthetic organism (plant seeds, seedlings, leaf vegetables, root vegetables, flowers, fruit trees, seaweeds, algae, microalgae, and the like) by the main light in at least a part of a cultivation period from sowing to harvest, in which the additional light includes additional signal light of which light intensity periodically fluctuates and additional relaxation light of which light intensity changes more slowly than the additional light, and a wavelength (such as 500 to 2000 nm) of the additional signal light includes a light absorption wavelength band (such as a wavelength ban of 600 nm or more) of a red light receptor (such as Pr-type phytochrome, Pfr-type phytochrome) in the photosynthetic organism.

Note that the photosynthetic organism to which the present production method can be applied can be subdivided as follows from the viewpoint of agricultural crops. That is, the present production method contributes to increasing the production amount and production rate of these agricultural products.

(10-1) Rice: rice grown on the assumption of being used for food, rice for feed, rice for cultivating, rice not suitable for food, and bioethanol raw material rice;

(10-2) Wheat and miscellaneous grains: wheat, barley (six-row barley, two-row barley, naked barley), corn (dried), grain sorghum, sorghum (sorghum, sorghum, tall millet, great millet), and other wheat and miscellaneous grains {buckwheat, millet, hie, millet, oat, rye}

(10-3) Beans (dried): soybean, red bean, peanut (with shell), other beans {Kidney bean (dried), pea (dried)}

(10-4) Leafy and stem vegetables: asparagus, cabbage, broccoli, lettuce (salad greens, non-conical lettuce, red-leaf lettuce, lettuce), spinach, Chinese cabbage, sprouts (bean sprouts), Komatsuna, shiso, chrysanthemum, Japanese mustard greens (water greens), bok choy, bamboo shoot, leeks, Chinese chive, onion, garlic, and other leafy and stem vegetables {shallots, cauliflower, Japanese ginger, mitsuba, celery, non-stick, Chinese cabbage, parsley, puffer, Japanese parsley, radish sprout, Udo, Tarame buds, Scallions, wild garlic, chives, Edible chrysanthemum, Japanese horseradish, Brussels sprouts, other vegetables for eating leaves or stems (including those that eat flowers, buds, and bulbs)}

(10-5) Fruit vegetables: melon, watermelon, strawberry, bell pepper (color bell pepper), cucumber, eggplant, tomato (cherry tomato), sweet corn (fruit or vegetable), pumpkin, green soybean (not dried), green bean (not dried), sugar pea (not dried), snap pea, and other fruit vegetables {okra, paprika, sweet green pepper, corn, white cucurbit, chili pepper (undried), yugao, broad bean, green peas}

(10-6) Root vegetables: carrot, turnip, radish, ginger, burdock, lotus root, yam (yam, wild yam, Chinese yam, Japanese yam, ginkgo potato, tsukuneimo), taro (ebiimo), other root vegetables (except for bulb vegetables), lily of the tree, Japanese radish, and root vegetables not classified otherwise (mainly those that eat root and tuber)

(10-7) Potatoes: potato, sweet potato

(10-8) Fruit: avocado, banana (not ripened), pineapple, orange (Citrus unshiu), orange (navel orange), lemon/lime, grapefruit, other citrus fruits {broad (decopon), buntan, iyokan, Citrus natsudaidai, yuzu, hassaku, ponkan, Kiyomi, Hyuganatsu, Sudachi, kinkan, tankan, kabosu, seminol}, grape, apple (Small apples, princess apples), sweet (cherry), peach (nectarine), pear (Japanese pear, Western pear, Chinese pear), persimmon, plum, kiwi fruit, chestnut, other fruits (peach, mango, fig, loquat, ginkgo, Akebia, Japanese pepper/pepper/vanilla fruit, nuts/walnuts (with shell), blueberry, olive)

(10-9) Flowers: Chrysanthemum (cut flowers), lilies (cut flowers), roses (cut flowers), lisianthus (cut flowers), carnation (cut flowers), cut branches {cut branches (including flowers, fruits, and branches) such as acacia, plum, cherry, bamboo, camellia, Japanese quince, Japanese anemone, and sedge}, other cut flowers (Statice, gerbera, baby's breath, alstroemeria, gentian, orchid, stock, delphinium, sweet pea, tulip, gladiolus, cut leaves), western orchid, flowering trees {bonsai, acacia, hydrangea, plum, maple, oleander, conifers, bamboo grass, azaleas, roses, forsythia, etc. (among woody plants, cold-tolerant ones and non-cold-tolerant ones grown for their flowers and fruits)}, houseplants {asparagus, bromeliads, ferns, cissus, ficus, palms, yucca, etc. (herbaceous plants and non-cold tolerant woody plants)}, other potted plants (cyclamens, cacti, succulents, begonias), flowering trees and plants (Plants and flowers (including saplings), garden tree saplings, street tree saplings, garden trees and street trees), and other flowers {bulbs, turf, ground covering plants (Vines, bamboo, Ophiopogon, herbaceous plants, woody plants), and seedling for flowerbed}

(10-10) Craft crops: rapeseed, sesame, coffee beans (not roasted), tea (fresh leaves), cocoa beans, sugar beet, sugar cane, leaf tobacco, konjac potato, cotton (seed cotton, ginned cotton, raw cotton, raw cotton), and other craft crops {hops (fresh/dried), herbs, fiber raw material agricultural products (hemp, jute, etc.), paper raw material agricultural products (Kozo, mitsumata, and the like), oil seed (sunflower seeds, camellia seeds, cotton seeds, etc.), chemical raw material agricultural crops (ginseng, licorice, astringents, etc.), essential oil/perfume raw material agricultural crops (peppermint etc.), dye raw material agricultural crops (Blue, safflower, etc.), other agricultural crops used to make tea such as persimmon leaves (excluding those classified otherwise, such as wheat and barley and buckwheat), natural rubber (latex etc.)}.

(10-11) Other agricultural products: crops for grass and silage {grass (raw/dry), rice plants for the WCS, crops for silage (Green corn, sorghum, etc.), mulberry}

(11) A seedling grown by the method for producing a photosynthetic organism according to the above (10).

(12) A seed irradiated with the additional light by the method for producing a photosynthetic organism according to the above (10).

(13) Phytoplankton grown by the method for producing a photosynthetic organism according to the above (10).

(14) Microalgae grown by the method for producing a photosynthetic organism according to the above (10).

(15) A carbon dioxide absorbing device for performing the method for producing a photosynthetic organism according to the above (10).

Industrial Applicability

The plant cultivation method, the plant cultivation device, and the method for producing a photosynthetic organism of the present invention are effective for open-field cultivation, house cultivation, and plant factory cultivation. Since it has a growth accelerating effect on all plants performing photosynthesis, it can be used for improvement in production efficiency and reduction in production cost of lettuce, leaves such as perilla and basil, fruit trees such as strawberry, grains such as rice and wheat, seaweeds such as wakame, green algae such as scoop and Euglena, and the like.

Reference Signs List

10    plant cultivation device
12    cultivation floor
14    light irradiation portion
16    irradiation light control portion
18    protective member
20    main light source
22    additional light source
24    additional signal light source
26    additional relaxation light source
30    microalgae growth device
42    main light source
44    additional light source
50    irradiation light control portion

**Claims**

1.  A plant cultivation method comprising

    performing irradiation with main light for photosynthesis and additional light for accelerating photosynthesis of a plant by the main light in at least a part of a cultivation period from sowing to harvest, wherein the additional light includes additional signal light of which light intensity periodically fluctuates and additional relaxation light of which light intensity changes more slowly than the additional light, and a wavelength of the additional signal light includes a light absorption wavelength band of a red light receptor in the plant.

2. The plant cultivation method according to claim 1, wherein a leaf or a bud of a plant is cut off from a root, a branch, or a stem, only the leaf or the bud is irradiated with the main light for a certain period of time, and then the leaf or the bud is held in a dark place for a certain period of time.

3. A plant cultivation device which is irradiated with main light for photosynthesis of a plant, the plant cultivation device comprising:

an additional light source configured to emit additional light for accelerating photosynthesis of a plant by the main light; and
an irradiation light control portion capable of driving and controlling the additional light source,
wherein the additional light source includes
an additional signal light source configured to emit additional signal light of which light intensity periodically fluctuates, and
an additional relaxation light source configured to emit additional relaxation light of which light intensity changes more slowly than the additional light,
the additional relaxation light together with the additional signal light are emitted, and
the wavelength of the additional signal light includes a light absorption wavelength band of a red light receptor in the plant.

4. The plant cultivation method according to claim 1, comprising:

a first stage of performing cultivation with the additional light; and
a second stage of performing cultivation with the additional light irradiation stopped.

5. The plant cultivation method according to claim 4, wherein
the second stage is performed by moving a plant from a place where the first stage is performed to another place.

6. The plant cultivation method according to claim 4 or 5, wherein
a cultivation target is selected from the group consisting of seedlings, phytoplankton, and microalgae.

7. The plant cultivation device according to claim 3, wherein the device performs

cultivation of a first stage of performing cultivation with the additional light; and
cultivation of a second stage of performing cultivation with the additional light irradiation stopped.

8. The plant cultivation device according to claim 7, wherein
the second stage is performed by moving a plant from a place where the first stage is performed to another place.

9. The plant cultivation method according to claim 1, wherein
a cultivation target region is irradiated with the additional light from a moving object.

10. A method for producing a photosynthetic organism comprising performing irradiation with main light for photosynthesis and irradiation with additional light for accelerating photosynthesis of the photosynthetic organism by the main light in at least a part of a cultivation period from sowing to harvest, wherein
the additional light includes additional signal light of which light intensity periodically fluctuates and additional relaxation light of which light intensity changes more slowly than the additional signal light, and a wavelength of the additional signal light includes a light absorption wavelength band of a red light receptor in a photosynthetic organism.

11. A seedling grown by the method for producing a photosynthetic organism according to claim 10.

12. A seed irradiated with the additional light by the method for producing a photosynthetic organism according to claim 10.

**13.** Phytoplankton grown by the method for producing a photosynthetic organism according to claim 10.

**14.** Microalgae grown by the method for producing a photosynthetic organism according to claim 10.

**15.** A carbon dioxide absorbing device for performing the method for producing a photosynthetic organism according to claim 10.

# FIG. 1

# FIG. 2

# FIG. 3

```
┌─────────────────────────────────┐
│       Pr-TYPE PHYTOCHROME       │
│     (LOCALIZES TO CYTOPLASM)    │
└─────────────────────────────────┘
```

FAR-INFRARED LIGHT    THERMAL    RED LIGHT
                      RELAXATION
                      (IN DARK)

```
┌─────────────────────────────────┐
│       Pfr-TYPE PHYTOCHROME      │
│    (MIGRATES TO CELL NUCLEUS)   │
└─────────────────────────────────┘
```

FIG. 4

EP 4 533 937 A1

# FIG. 5

DIAGRAM TEMPORAL CHANGE IN NUMBER OF PHOTONS INCIDENT ON LEAF SURFACE

# FIG. 6

LEAVE IN DARK PLACE

WHITE LED 12 HOURS

WHITE LED 24 HOURS

0    4    8    12   16   20   24

TIME (HOUR)

WHITE LED ▪DARD PLACE

IRRADIATION TIME (LIGHT IRRADIATION PROFILE)

# FIG. 7

16
IRRADIATION LIGHT
CONTROL PORTION

10

20

24

22

14

26

MAIN LIGHT
SOURCE

ADDITIONAL SIGNAL
LIGHT SOURCE

ADDITIONAL RELAXATION
LIGHT SOURCE

18

12

FIG. 8

EP 4 533 937 A1

EXAMPLE 1

CULTIVATION PLANT: LETTUCE
MEASUREMENT: WET WEIGHT, ASCORBIC ACID, GLUTAMIC ACID

MAIN LIGHT

ADDITIONAL LIGHT 1

ADDITIONAL LIGHT 2

SEEDLING RAISING | GROWING | HARVEST

0    7    NUMBER OF CULTIVATION DAYS    35   DAY

| MAIN LIGHT | WAVELENGTH BAND 380nm-750nm<br>PPFD=220 |
|---|---|
| ADDITIONAL LIGHT 1 | ADDITIONAL SIGNAL LIGHT (PPFD=0.05)<br>WAVELENGTH BAND 620nm-640nm (Pr EXCITING LIGHT) |
| | ADDITIONAL RELAXATION LIGHT (PPFD=0.05)<br>WAVELENGTH BAND 620nm-640nm |
| ADDITIONAL LIGHT 2 | ADDITIONAL SIGNAL LIGHT (PPFD=0.05)<br>WAVELENGTH BAND 710nm-1000nm (Pfr EXCITING LIGHT) |
| | ADDITIONAL RELAXATION LIGHT (PPFD=0.05)<br>WAVELENGTH BAND 710nm-1000nm |

MAIN LIGHT

ADDITIONAL LIGHT 1

ADDITIONAL LIGHT 2

0   6   12   18   24    TIME

IRRADIATION TIME ZONE PER DAY

NUMBER OF PHOTONS / TIME

$\Delta T_1$   $\Delta T_2$   $\Delta T_3$   T

DIAGRAM   TEMPORAL CHANGE IN NUMBER OF PHOTONS INCIDENT ON LEAF SURFACE

ADDITIONAL SIGNAL LIGHT

T  = 25μs
$\Delta T1$=  2μs
$\Delta T2$=  2μs
$\Delta T3$=  4μs

ADDITIONAL RELAXATION LIGHT

T=100μs

# FIG. 9

EXAMPLE 2

CULTIVATION PLANT: GARLIC
MEASUREMENT: WET WEIGHT, ALLYLCYSTEINE

MAIN LIGHT 1

ADDITIONAL LIGHT 1

MAIN LIGHT 2

HARVEST

NUMBER OF CULTIVATION DAYS
0 1 2 3 4 5 6 7
DAY

MAIN LIGHT 1

ADDITIONAL LIGHT 1

MAIN LIGHT 2

IRRADIATION TIME ZONE PER DAY
0 6 12 20 24
TIME

ADDITIONAL LIGHT = ADDITIONAL PULSED LIGHT
+ ADDITIONAL RELAXATION LIGHT

ADDITIONAL SIGNAL LIGHT

T = 30μs
ΔT1 = 2μs
ΔT2 = 10μs
ΔT3 = 4μs

ADDITIONAL RELAXATION LIGHT

T=16.7ms

NUMBER OF PHOTONS

TIME

DIAGRAM TEMPORAL CHANGE IN NUMBER OF PHOTONS INCIDENT ON LEAF SURFACE

MAIN LIGHT 1
WAVELENGTH BAND 380nm~750nm
PPFD=160

ADDITIONAL LIGHT 1
ADDITIONAL SIGNAL LIGHT
WAVELENGTH BAND 600nm~660nm
PPFD=0.1
ADDITIONAL RELAXATION LIGHT
WAVELENGTH BAND 500nm~850nm
PPFD=3.0

MAIN LIGHT 2
WAVELENGTH BAND 380nm~750nm
PPFD=160

# FIG. 10

EXAMPLE 3

CULTIVATION PLANT: OLIVE
MEASUREMENT: TOTAL AMOUNT OF POLYPHENOL

MAIN LIGHT 1 | SUNLIGHT

MAIN LIGHT 2 | WHITE LED (WAVELENGTH=380–750nm), PPFD=230

TEST METHOD

AFTER NOON, OLIVE LEAVES ARE CUT OFF

LEAVE IN DARK PLACE

PLACE FRESH OLIVE LEAVES IN CONTAINER WITH 65% HUMIDITY

CONTINUOUSLY IRRADIATE WITH WHITE LED, AND THEN, STORE IN DARK PLACE

COMPARATIVE TEST 3

COMPARATIVE TEST 2

ANALYZE TOTAL AMOUNT OF POLYPHENOL

CONTROL

IMMEDIATELY AFTER CUTTING OFF

ANALYZE TOTAL AMOUNT OF POLYPHENOL

COMPARATIVE TEST 1

AFTER 24 HOURS

ANALYZE TOTAL AMOUNT OF POLYPHENOL

FIG. 11

EP 4 533 937 A1

ADDITIONAL LIGHT = ADDITIONAL SIGNAL LIGHT
+ ADDITIONAL RELAXATION LIGHT

LIGHT
INTENSITY

T

TIME

ADDITIONAL SIGNAL LIGHT

LIGHT
INTENSITY

T

TIME

ADDITIONAL RELAXATION LIGHT

T(ADDITIONAL SIGNAL LIGHT) ≪ T(ADDITIONAL RELAXATION LIGHT)

# FIG. 12

24

ADDITIONAL SIGNAL
LIGHT SOURCE

28A

26

ADDITIONAL RELAXATION
LIGHT SOURCE

28A

# FIG. 13

24

ADDITIONAL SIGNAL
LIGHT SOURCE

28B

26

ADDITIONAL RELAXATION
LIGHT SOURCE

28B

# FIG. 14

FIG. 15

# FIG. 16

# FIG. 17

# FIG. 18

S1 — IRRADIATE WITH ADDITIONAL LIGHT

S2 — CULTIVATE IN HIGH-SPEED GROWTH MODE

S3 — TRANSPLANT

S4 — CULTIVATE ONLY WITH MAIN LIGHT

FIG. 19

# FIG. 20

S11 — INSERT INTO CULTIVATION VESSEL

S12 — IRRADIATE WITH ADDITIONAL LIGHT

S13 — SHIFT TO HIGH-SPEED PROLIFERATION MODE

S14 — CONTINUE TO FLOW CULTURE SOLUTION

S15 — RECOVER CULTURE SOLUTION

# FIG. 21

# FIG. 22

(a)

(b)

| | INTERNATIONAL SEARCH REPORT | International application No. |
|---|---|---|
| | | **PCT/JP2023/005717** |

**A. CLASSIFICATION OF SUBJECT MATTER**

*A01G 7/00*(2006.01)i
FI: A01G7/00 601C

According to International Patent Classification (IPC) or to both national classification and IPC

**B. FIELDS SEARCHED**

Minimum documentation searched (classification system followed by classification symbols)

A01G7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-212011 A (SHARP KABUSHIKI KAISHA) 27 October 2011 (2011-10-27)<br>claims 23-25 | 1-15 |
| A | JP 2015-142585 A (SHOWA DENKO KK) 06 August 2015 (2015-08-06)<br>claims | 1-15 |
| A | JP 2017-528130 A (XIANT TECHNOLOGIES, INC.) 28 September 2017 (2017-09-28)<br>paragraphs [0075]-[0077], fig. 8-10 | 1-15 |
| A | JP 2020-54287 A (CENTRAL RESEARCH INSTITUTE OF ELECTRIC POWER<br>INDUSTRY) 09 April 2020 (2020-04-09)<br>claims | 1-15 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 April 2023** | **25 April 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

| International application No. |
| --- |
| **PCT/JP2023/005717** |

| Patent document cited in search report | | | Publication date (day/month/year) | Patent family member(s) | | | Publication date (day/month/year) |
| --- | --- | --- | --- | --- | --- | --- | --- |
| JP | 2011-212011 | A | 27 October 2011 | WO | 2011/115123 | A1 | |
| | | | | claims 23-25 | | | |
| | | | | CN | 102821594 | A | |
| JP | 2015-142585 | A | 06 August 2015 | US | 2014/0165462 | A1 | |
| | | | | claims | | | |
| | | | | US | 2014/0170733 | A1 | |
| | | | | WO | 2013/021676 | A1 | |
| | | | | WO | 2013/021952 | A1 | |
| | | | | WO | 2013/021675 | A1 | |
| | | | | EP | 2740348 | A1 | |
| | | | | EP | 2740349 | A1 | |
| | | | | CN | 103687478 | A | |
| | | | | RU | 2014108314 | A | |
| | | | | TW | 201306733 | A | |
| | | | | TW | 201306734 | A | |
| | | | | CN | 103747670 | A | |
| JP | 2017-528130 | A | 28 September 2017 | US | 2017/0027135 | A1 | |
| | | | | fig. 12-14 | | | |
| | | | | US | 2017/0142940 | A1 | |
| | | | | US | 2017/0347532 | A1 | |
| | | | | US | 2018/0184623 | A1 | |
| | | | | US | 2019/0141961 | A1 | |
| | | | | US | 2020/0260654 | A1 | |
| | | | | US | 2020/0281167 | A1 | |
| | | | | US | 2022/0211011 | A1 | |
| | | | | WO | 2016/033350 | A1 | |
| | | | | EP | 3185669 | A1 | |
| | | | | CA | 2959136 | A | |
| | | | | CN | 106793757 | A | |
| | | | | MX | 2017002653 | A | |
| | | | | CN | 111511057 | A | |
| JP | 2020-54287 | A | 09 April 2020 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019031559 A

- JP 2021207333 A